# FASCICULE DE BREVET EUROPEEN

(11) **EP 2 476 061 B1**
(45) Date de publication et mention de la délivrance du brevet: **24.07.2013**
(21) Numéro de dépôt: 10769002.6
(22) Date de dépôt: 10.09.2010
(51) Int. Cl.: G06F 13/28

(54) **CONTROLEUR D'ACCES DIRECT EN MEMOIRE, PROCEDE ET PROGRAMME D'ORDINATEUR CORRESPONDANTS**
DIREKT-SPEICHERZUGRIFFSSTEUERUNG, ZUGEHÖRIGES VERFAHREN UND COMPUTERPROGRAMM
DIRECT MEMORY ACCESS CONTROLLER, CORRESPONDING METHOD AND COMPUTER PROGRAM

(30) Priorité: 11.09.2009 FR 0956261; 08.10.2009 FR 0957034
(43) Date de publication de la demande: 18.07.2012
(73) Titulaire: Commissariat à l'Énergie Atomique et aux Énergies Alternatives, 75015 Paris (FR)
(72) Inventeur: DURAND, Yves, F-38330 Saint-Ismier (FR); BERNARD, Christian, F-38960 Saint-Etienne de Crossey (FR)
(74) Mandataire: Bonnet, Michel
(86) Numéro de dépôt international: PCT/FR2010/051887
(87) Numéro de publication internationale: WO 2011/030070

(56) Documents cités:
- EP-A1- 0 933 926
- EP-A1- 1 962 181
- FR-A1- 2 827 995
- US-A- 5 686 917
- US-A- 5 974 483
- US-A1- 2004 008 741
- "FRAME HANDLER WITH DYNAMIC ALLOCATION OF BUFFER SPACE", IBM TECHNICAL DISCLOSURE BULLETIN, INTERNATIONAL BUSINESS MACHINES CORP. (THORNWOOD), US, vol. 32, no. 6B, 1 novembre 1989 (1989-11-01), pages 37-40, XP000073673, ISSN: 0018-8689

## Description

La présente invention concerne un contrôleur d'accès direct en mémoire, un procédé de transfert de données depuis au moins une source de données vers au moins un destinataire de ces données mis en oeuvre par ce contrôleur et un programme d'ordinateur correspondant.

Un tel contrôleur, qualifié de contrôleur DMA (de l'Anglais « Direct Memory Access »), est généralement utilisé dans un dispositif de traitement de données à unité centrale de traitement tel que par exemple un circuit intégré. Il permet de transférer des données traitées ou fournies par l'unité centrale de traitement, en provenance de ou allant vers un périphérique tel qu'un port de communication, un disque dur ou une mémoire quelconque, entre ce périphérique et une mémoire locale du dispositif par exemple, sans intervention de l'unité centrale de traitement si ce n'est pour initier et conclure le transfert.

Un contrôleur DMA est par exemple très utile dans un système où des accès répétés à des périphériques rapides pourraient sinon presque bloquer ou au moins ralentir le traitement effectué par l'unité centrale. Sa présence optimise le temps de traitement des applications logicielles exécutées par l'unité centrale en laissant le contrôleur DMA gérer les transferts de données depuis et vers la mémoire locale.

L'invention s'applique plus particulièrement à un contrôleur d'accès direct en mémoire pour le transfert de données depuis au moins une source de données vers au moins un destinataire de ces données, via une mémoire tampon circulaire comprenant un nombre prédéterminé d'emplacements élémentaires de mémoire successifs, chaque emplacement élémentaire étant identifié par une adresse comprise entre une adresse de base et une adresse de sommet de la mémoire tampon circulaire, le contrôleur d'accès comportant un module de gestion d'écritures conçu pour écrire des données reçues de la source dans la mémoire tampon circulaire et des moyens de stockage d'un premier pointeur de lecture et d'un deuxième pointeur d'écriture, ledit pointeur de lecture, respectivement d'écriture, indiquant un emplacement élémentaire de la mémoire tampon circulaire dans lequel une donnée peut être lue, respectivement écrite.

Un tel contrôleur DMA est par exemple décrit dans le brevet européen publié sous le numéro EP 0 933 926. Son rôle est d'écrire, dans des mémoires tampon, des données qui sont lues successivement par des décodeurs destinataires ayant accès en lecture à ces mémoires tampon. Un pointeur d'écriture, défini pour chaque mémoire tampon, est incrémenté d'une adresse d'emplacement élémentaire de mémoire à chaque opération d'écriture par le contrôleur DMA d'une donnée dans la mémoire tampon correspondante. De même, un pointeur de lecture, défini pour chaque mémoire tampon, est incrémenté d'une adresse d'emplacement élémentaire de mémoire à chaque opération de lecture par l'un des destinataires d'une donnée dans la mémoire tampon correspondante.

Chaque mémoire tampon occupe un espace mémoire compris entre une adresse de base et une adresse de sommet. Les pointeurs d'écriture et de lecture d'une mémoire tampon sont alors incrémentés entre l'adresse de base et l'adresse de sommet de cette mémoire tampon et reviennent à l'adresse de base par incrémentation après avoir atteint l'adresse de sommet : c'est ce qui permet de qualifier ces mémoires tampon de « mémoires tampon circulaires ».

L'avantage de cette configuration de mémoire tampon circulaire de type FIFO (de l'Anglais « First In First Out ») est d'éviter des contraintes de réallocation de mémoire en cas de réception de données supplémentaires, puisque tout se passe comme s'il était possible d'écrire indéfiniment des données dans une telle mémoire FIFO tant que l'adresse vers laquelle pointe le pointeur d'écriture n'atteint pas celle vers laquelle pointe le pointeur de lecture, c'est-à-dire tant que la mémoire n'est pas pleine.

Mais la taille de la mémoire tampon circulaire doit alors être suffisamment grande pour qu'en fonctionnement normal elle ne se remplisse jamais, ce qui nécessite de réserver a priori un espace mémoire important pour cette mémoire circulaire.

Une solution partielle à ce problème est fournie par le document EP 0 933 926. Lorsque l'une des mémoires tampon circulaires est pleine et que le contrôleur DMA écrit une donnée à un emplacement où est stockée une donnée non encore lue par le destinataire concerné, en d'autres termes lorsque le pointeur d'écriture atteint ou dépasse le pointeur de lecture de cette mémoire tampon circulaire, une erreur est signalée. Mais cette solution n'est pas satisfaisante dans la plupart des cas, car les données initiales correspondant aux emplacements réécrits sont alors perdues.

En outre, cette solution ne résout pas non plus le cas où l'un des destinataires cherche à lire une donnée alors que la mémoire tampon circulaire qui lui est associée est vide ou que les données qu'elle stocke sont obsolètes, en d'autres termes lorsque le pointeur de lecture atteint ou dépasse le pointeur d'écriture de cette mémoire tampon circulaire.

Il peut ainsi être souhaité de prévoir un contrôleur d'accès direct en mémoire qui permette de s'affranchir des problèmes et contraintes précités.

L'invention a donc pour objet un contrôleur d'accès direct en mémoire pour le transfert de données depuis au moins une source de données vers au moins un destinataire de ces données, via une mémoire tampon circulaire, le contrôleur d'accès comportant :
- un module de gestion d'écritures conçu pour écrire des données reçues de ladite au moins une source dans la mémoire tampon circulaire,
- des moyens de stockage d'un premier pointeur de lecture et d'un deuxième pointeur d'écriture, ledit pointeur de lecture, respectivement d'écriture, indiquant un emplacement élémentaire de la mémoire tampon circulaire dans lequel une donnée peut être lue, respectivement écrite,
- un module de gestion de lectures conçu pour lire des données stockées dans la mémoire tampon circulaire et les transférer vers ledit au moins un destinataire, et
- des moyens de blocage en lecture, respectivement en écriture, dans la mémoire tampon circulaire en fonction des positions des emplacements élémentaires indiqués par lesdits pointeurs de lecture et d'écriture,
- des moyens de stockage d'un pointeur de travail de lecture ou d'écriture différent des premier et deuxième pointeurs, et
- des moyens de mise à jour du pointeur de travail, après chaque lecture ou écriture effectuée par ce pointeur de travail, selon une logique de mise à jour prédéterminée,
caractérisé en ce que la logique de mise à jour prédéterminée comporte des déplacements du pointeur de travail en avant ou en arrière dans la mémoire tampon circulaire, et en ce qu'il comprend des moyens de blocage du pointeur de travail de lecture ou d'écriture si le pointeur de travail de lecture pointe à l'extérieur d'un espace mémoire réservé à la lecture défini depuis le pointeur de lecture jusqu'à l'adresse précédant le pointeur d'écriture, ou respectivement, si le pointeur de travail d'écriture pointe à l'extérieur d'un espace mémoire libre pour l'écriture défini depuis le pointeur d'écriture jusqu'à l'adresse précédant le pointeur de lecture.

Ainsi, la mémoire tampon circulaire remplit une fonction de tampon intermédiaire à lecture/écriture bloquante entre la source et le destinataire. Cette fonction est gérée à l'aide des pointeurs de lecture et d'écriture par le contrôleur d'accès direct en mémoire qui possède les accès en écriture et en lecture dans cette mémoire tampon circulaire. De cette manière, il est capable de synchroniser le ou les flux de données entrant(s) (flux engendré par la ou les source(s)) avec le ou les flux de données sortant(s) (flux engendré par le ou les destinataire(s)) sans avoir besoin de se synchroniser avec l'unité centrale de traitement.

Ainsi, il est également possible d'envisager davantage de souplesse dans la lecture ou l'écriture de données dans la mémoire tampon circulaire sans que le contrôleur d'accès direct en mémoire ne perde sa capacité à synchroniser les flux entrant et sortant.

De façon optionnelle, les moyens de mise à jour du pointeur de travail comportent des moyens d'exécution d'un micrologiciel de mise à jour.

Par micrologiciel, on entend un logiciel embarqué dans un composant matériel tel qu'un circuit intégré, plus précisément dans une mémoire volatile ou non de ce composant. Ce terme est utilisé dans la suite de la description comme une traduction du terme Anglais « firmware ».

De façon optionnelle également, la logique de mise à jour prédéterminée comporte au moins un saut d'adresse dans la mémoire tampon circulaire.

Ainsi, la mémoire tampon circulaire dont le contrôleur d'accès direct en mémoire gère le suivi des lectures et écritures n'est pas utilisée par le contrôleur comme une simple liste de type FIFO. Grâce à une programmation prédéterminée des mises à jour du troisième pointeur d'écriture ou de lecture selon une logique prédéterminée comportant au moins un saut d'adresse, par opposition à une logique purement incrémentale, il est possible de changer la séquence des données, entre leur réception depuis la source et leur émission vers le destinataire via la mémoire tampon circulaire.

De façon optionnelle également, les moyens de blocage en lecture sont conçus pour bloquer toute lecture de donnée dans la mémoire tampon circulaire lorsqu'une mise à jour du pointeur de lecture fait que l'adresse vers laquelle il pointe atteint ou dépasse l'adresse vers laquelle pointe le pointeur d'écriture, et les moyens de blocage en écriture sont conçus pour bloquer toute écriture de donnée dans la mémoire tampon circulaire lorsqu'une mise à jour du pointeur d'écriture fait que l'adresse vers laquelle il pointe atteint ou dépasse l'adresse vers laquelle pointe le pointeur de lecture.

De façon optionnelle également, le premier pointeur de lecture est un pointeur de lecture à libération d'espace mémoire pour l'écriture de données, et le pointeur de travail est un pointeur de lecture à conservation de données lues.

De façon optionnelle également, le micrologiciel est conçu pour la mise à jour uniquement du premier pointeur de lecture et du pointeur de travail de lecture, le pointeur d'écriture étant mis à jour automatiquement par incrémentation sans saut d'adresse à chaque opération d'écriture d'une donnée dans la mémoire tampon circulaire.

De façon optionnelle également, le deuxième pointeur d'écriture est un pointeur d'écriture à réservation d'espace mémoire pour la lecture de données, et le pointeur de travail est un pointeur d'écriture

De façon optionnelle également, le micrologiciel est conçu pour la mise à jour uniquement du deuxième pointeur d'écriture et du pointeur de travail en écriture, le pointeur de lecture étant mis à jour automatiquement par incrémentation sans saut d'adresse à chaque opération de lecture d'une donnée dans la mémoire tampon circulaire.

De façon optionnelle également, le transfert de données étant prévu vers plusieurs destinataires, pour chaque destinataire, les moyens de stockage comportent un pointeur de travail de lecture, différent du premier pointeur de lecture, le contrôleur comportant des moyens de mise à jour du pointeur de travail de lecture de chaque destinataire, et le contrôleur d'accès direct en mémoire comprend des moyens de blocage d'un pointeur de travail de lecture si celui-ci pointe à l'extérieur d'un espace mémoire réservé à la lecture défini depuis le premier pointeur de lecture jusqu'à l'adresse précédant le pointeur d'écriture.

De façon optionnelle également, le transfert de données étant prévu vers plusieurs destinataires, pour chaque destinataire, les moyens de stockage comportent un premier pointeur de lecture associé à un pointeur de travail de lecture, et le contrôleur d'accès direct comprend des moyens de blocage de chaque pointeur de travail de lecture si celui-ci pointe à l'extérieur d'un espace mémoire réservé à la lecture défini depuis le premier pointeur de lecture associé au pointeur de travail de lecture considéré jusqu'à l'adresse précédant le pointeur d'écriture.

De façon optionnelle également, le transfert de données étant prévu depuis plusieurs sources, pour chaque source, les moyens de stockage comportent un pointeur de travail d'écriture, différent du deuxième pointeur d'écriture et comprenant des moyens de blocage d'un pointeur de travail d'écriture si celui-ci pointe à l'extérieur d'un espace mémoire libre pour l'écriture défini depuis le deuxième pointeur d'écriture jusqu'à l'adresse précédant le premier pointeur de lecture.

De façon optionnelle également, le transfert de données étant prévu depuis plusieurs sources, pour chaque source, les moyens de stockage comportent un deuxième pointeur d'écriture associé à un pointeur de travail d'écriture, et le contrôleur d'accès direct comprend des moyens de blocage de chaque pointeur de travail d'écriture si celui-ci pointe à l'extérieur d'un espace mémoire libre pour l'écriture défini depuis le deuxième pointeur d'écriture associé au pointeur de travail d'écriture considéré jusqu'à l'adresse précédant le premier pointeur de lecture.

De façon optionnelle également, les moyens de stockage comportent, d'une part, un pointeur de travail d'écriture, différent du deuxième pointeur d'écriture, et, d'autre part, un pointeur de travail de lecture, différent du premier pointeur de lecture.

De façon optionnelle également, la logique de mise à jour prédéterminée comporte des déplacements du pointeur de travail en avant et en arrière dans la mémoire tampon circulaire.

L'invention a également pour objet un procédé de transfert de données depuis au moins une source de données vers au moins un destinataire de ces données par un contrôleur d'accès direct en mémoire selon l'invention, comportant, chaque donnée reçue de la source étant émise par le contrôleur vers une mémoire tampon circulaire et chaque donnée à transmettre au destinataire étant lue dans la mémoire tampon circulaire par le contrôleur, des étapes de blocage en lecture par le contrôleur dans la mémoire tampon circulaire et de blocage en écriture par le contrôleur dans la mémoire tampon circulaire en fonction des positions relatives des emplacements élémentaires indiqués par les pointeurs de lecture et d'écriture, caractérisé en ce qu'il comporte en outre les étapes suivantes :
- déplacements du pointeur de travail en avant ou en arrière dans la mémoire tampon circulaire,
- blocage du pointeur de travail de lecture ou d'écriture si le pointeur de travail de lecture pointe à l'extérieur d'un espace mémoire réservé à la lecture défini depuis le pointeur de lecture jusqu'à l'adresse précédent le pointeur d'écriture, ou respectivement, si le pointeur de travail d'écriture pointe à l'extérieur d'un espace mémoire libre pour l'écriture défini depuis le pointeur d'écriture jusqu'à l'adresse précédant le pointeur de lecture.

Enfin, l'invention a également pour objet un programme d'ordinateur téléchargeable depuis un réseau de communication et/ou enregistré sur un support lisible par ordinateur et/ou exécutable par un contrôleur d'accès direct en mémoire, comprenant des instructions de code de programme pour l'exécution des étapes d'un procédé de transfert de données tel que défini précédemment lorsque ledit programme est exécuté par un contrôleur d'accès direct en mémoire.

L'invention sera mieux comprise à l'aide de la description qui va suivre, donnée uniquement à titre d'exemple et faite en se référant aux dessins annexés dans lesquels :
- la figure 1 représente schématiquement la structure générale d'un contrôleur d'accès direct en mémoire, selon un premier mode de réalisation de l'invention,
- la figure 2 représente schématiquement la structure générale d'un circuit intégré à microprocesseur, comportant le contrôleur d'accès direct en mémoire de la figure 1,
- les figures 3A et 3B représentent schématiquement la structure d'une mémoire tampon circulaire gérée par le contrôleur d'accès direct en mémoire de la figure 1,
- la figure 4 illustre les étapes successives d'un procédé de transfert de données, selon un mode de réalisation de l'invention mis en oeuvre par le contrôleur d'accès direct de la figure 1,
- la figure 5 représente schématiquement la structure générale d'un contrôleur d'accès direct en mémoire, selon un second mode de réalisation de l'invention,
- la figure 6 illustre schématiquement le fonctionnement avantageux du contrôleur d'accès direct en mémoire de la figure 5 dans une situation de blocage d'un destinataire,
- la figure 7 représente schématiquement la structure d'une mémoire tampon circulaire gérée par le contrôleur d'accès direct en mémoire de la figure 5, et
- la figure 8 illustre les étapes successives d'un procédé de transfert de données mis en oeuvre par le contrôleur d'accès direct en mémoire de la figure 5,

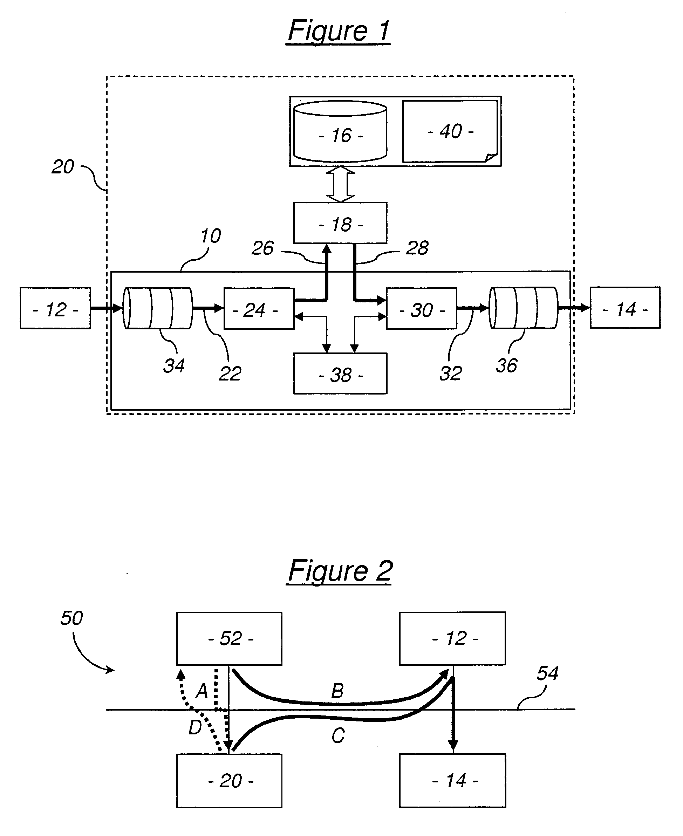

Le contrôleur d'accès direct en mémoire ou contrôleur DMA 10 représenté sur la figure 1 a pour fonction de transférer des données depuis au moins une source de données 12 vers au moins un destinataire 14 de ces données via une mémoire tampon circulaire 16 comportant un nombre prédéterminé d'emplacements élémentaires de mémoire successifs.

Le contrôleur DMA 10 est apte à accéder en écriture et en lecture aux emplacements élémentaires de la mémoire tampon circulaire 16 par l'intermédiaire d'un module 18 de commande des accès en écriture et en lecture de données s'interfaçant entre le contrôleur DMA 10 et un support de stockage intégrant la mémoire tampon circulaire 16. On notera que dans une variante de réalisation, le contrôleur DMA, portant alors la référence 20, inclut le support de stockage intégrant la mémoire tampon circulaire 16 et le module 18 de commande des accès en écriture et en lecture. En pratique, il peut se présenter sous la forme d'un système sur puce autonome, par exemple un circuit intégré de type CMOS.

A titre d'exemple non limitatif d'implémentation, selon une architecture envisageable dite de type NoC (de l'Anglais « Network on Chip ») ou réseau sur puce, le contrôleur DMA 10 ou 20 est considéré comme constitué d'éléments fonctionnels communiquant entre eux par l'intermédiaire de liens d'un réseau à commutation de paquets.

Conformément à cette architecture pour réaliser le transfert de données depuis la source 12 vers le destinataire 14, le contrôleur DMA 10 ou 20 comporte les éléments suivants :
- un lien 22 de réception de données en provenance de la source 12,
- un module 24 de gestion des écritures de données par le contrôleur 10 ou 20 dans la mémoire tampon circulaire 16, ce module étant activé par des données qu'il reçoit du lien 22,
- un lien 26 d'émission de données vers la mémoire tampon circulaire 16 pour l'écriture de ces données dans des emplacements élémentaires de la mémoire par l'intermédiaire du module 18 de commande des accès en écriture et en lecture,
- un lien 28 de réception de données en provenance de la mémoire tampon circulaire 16 pour la lecture de ces données dans des emplacements élémentaires de la mémoire par l'intermédiaire du module 18 de commande des accès en écriture et en lecture,
- un module 30 de gestion des lectures de données par le contrôleur 10 ou 20 dans la mémoire tampon circulaire 16, apte à recevoir les données fournies par le lien 28, et
- un lien 32 d'émission des données lues vers le destinataire 14.

Grâce à ces éléments, le contrôleur DMA 10 ou 20 émet chaque donnée reçue de la source 12 vers la mémoire tampon circulaire 16, chaque donnée destinée à être transmise au destinataire 14 étant ensuite lue dans la mémoire tampon circulaire 16 par le contrôleur DMA 10 ou 20. La mémoire tampon circulaire 16 remplit ainsi une fonction de tampon intermédiaire entre la source 12 et le destinataire 14.

De façon optionnelle, le lien 22 de réception de données comprend une mémoire tampon d'entrée 34 de type FIFO, permettant par exemple de stocker temporairement des données reçues de la source 12 alors que la mémoire tampon circulaire 16 est bloquée en écriture parce qu'elle est pleine.

De façon optionnelle également, le lien 32 d'émission des données lues comprend une mémoire tampon de sortie 36 de type FIFO, permettant par exemple de stocker temporairement des données lues dans la mémoire tampon circulaire 16 alors que le destinataire 14 n'est pas encore prêt à les recevoir ou alors que le réseau de sortie est temporairement saturé.

Pour synchroniser le flux de données entrant dans le contrôleur DMA et le flux de données sortant du contrôleur DMA, celui-ci comporte en outre des moyens 38 de stockage de descripteurs de la mémoire tampon circulaire 16.

Ces descripteurs comportent au moins un pointeur de base PB pointant vers une adresse de base de la mémoire tampon circulaire 16 dans son support de stockage, un pointeur de sommet PS pointant vers une adresse de sommet de la mémoire tampon circulaire 16 dans son support de stockage, un pointeur d'écriture PE pointant vers une adresse d'emplacement élémentaire de la mémoire tampon circulaire 16 où une prochaine donnée reçue par le contrôleur DMA 10 ou 20 peut être écrite et un pointeur de lecture PL pointant vers une adresse d'emplacement élémentaire de la mémoire tampon circulaire 16 où une prochaine donnée peut être lue pour être transmise au destinataire.

Puisque la mémoire tampon 16 est une mémoire circulaire dont la taille est définie par le nombre d'emplacements élémentaires compris entre les adresses de base et de sommet désignées par les pointeurs PB et PS, chaque emplacement élémentaire de cette mémoire vers lequel peuvent pointer les pointeurs d'écriture et de lecture PE et PL est identifié par une adresse comprise entre l'adresse de base et l'adresse de sommet.

Les pointeurs de base et de sommet PB et PS sont prédéterminés et destinés à rester constants alors que les pointeurs d'écriture PE, respectivement de lecture PL, sont variables et destinés à être mis à jour, par exemple par incrémentation d'un emplacement élémentaire dans le sens de la base vers le sommet, suite à une opération d'écriture, respectivement de lecture, dans la mémoire tampon circulaire.

Comme indiqué précédemment, la circularité de cette mémoire tampon 16 est liée au fait que lorsqu'un pointeur d'écriture ou de lecture atteint l'adresse de sommet de la mémoire, une incrémentation de ce pointeur d'un emplacement élémentaire le fait pointer sur l'adresse de base de la mémoire.

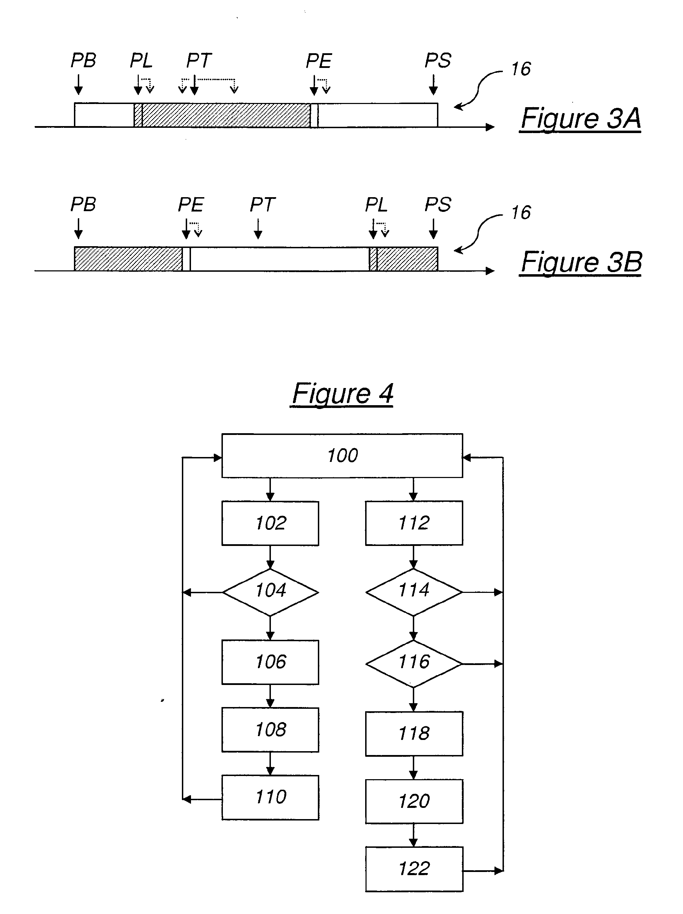

Par conséquent, les données stockées temporairement dans la mémoire tampon circulaire 16 en attendant d'être lues par le contrôleur DMA 10 ou 20 pour être transmises au destinataire 14 sont situées entre l'adresse du pointeur de lecture PL et l'adresse précédant celle du pointeur d'écriture PE dans le sens de la base vers le sommet. En revanche, l'espace mémoire situé dans la mémoire tampon circulaire entre l'adresse du pointeur d'écriture PE et l'adresse précédant celle du pointeur de lecture PL dans le sens de la base vers le sommet est un espace libre pour l'écriture. Cette structure de la mémoire tampon circulaire 16 associée aux descripteurs PB, PS, PE et PL est illustrée sur les figures 3A et 3B qui seront détaillées ultérieurement.

Sur la base de ces considérations, le module 24 de gestion des écritures de données est conçu pour écrire une donnée, ou au contraire bloquer son écriture, dans la mémoire tampon circulaire 16 en fonction notamment des valeurs des pointeurs d'écriture et de lecture PE et PL. Il est également conçu pour mettre à jour le pointeur d'écriture PE, soit de façon automatique à l'aide d'un séquenceur en l'incrémentant d'un emplacement élémentaire, soit de façon prédéterminée par l'exécution d'un micrologiciel 40 par exemple stocké dans le même support de stockage que la mémoire tampon circulaire 16. Plus précisément, dans un mode de réalisation simple de l'invention, une donnée à écrire dans la mémoire tampon circulaire 16 doit être écrite à l'adresse indiquée par le pointeur d'écriture PE ; son écriture doit être bloquée si une mise à jour du pointeur d'écriture PE réalisée précédemment par le module 24 de gestion des écritures fait que l'adresse vers laquelle il pointe atteint ou dépasse l'adresse vers laquelle pointe le pointeur de lecture PL (mémoire pleine).

Sur la base de ces mêmes considérations, le module 30 de gestion des lectures de données est conçu pour lire une donnée, ou au contraire bloquer sa lecture, dans la mémoire tampon circulaire 16 en fonction notamment des valeurs des pointeurs d'écriture et de lecture PE et PL. Il est également conçu pour mettre à jour le pointeur de lecture PL, soit de façon automatique à l'aide d'un séquenceur en l'incrémentant d'un emplacement élémentaire, soit de façon prédéterminée par l'exécution d'un micrologiciel 40 par exemple stocké dans le même support de stockage que la mémoire tampon circulaire 16. Plus précisément, dans un mode de réalisation simple de l'invention, une donnée à lire dans la mémoire tampon circulaire 16 doit être lue à l'adresse indiquée par le pointeur de lecture PL ; sa lecture doit être bloquée si une mise à jour du pointeur de lecture PL réalisée précédemment par le module 30 de gestion des lectures fait que l'adresse vers laquelle il pointe atteint ou dépasse l'adresse vers laquelle pointe le pointeur d'écriture PE (mémoire vide).

Concrètement, pour que les blocages et déblocages en lecture et écriture dans la mémoire tampon circulaire 16 fonctionnent comme indiqué ci-dessus, le module 24 de gestion des écritures peut être programmé pour, après chaque mise à jour du pointeur d'écriture PE :
- bloquer toute écriture de données dans la mémoire tampon circulaire 16 si le pointeur d'écriture PE atteint le pointeur de lecture PL (indication que la mémoire est pleine), et
- débloquer la lecture de données dans la mémoire tampon circulaire 16 si celle-ci était bloquée et que le pointeur d'écriture PE dépasse de nouveau le pointeur de lecture PL.

De même, le module 30 de gestion des lectures peut être programmé pour, après chaque mise à jour du pointeur de lecture PL :
- bloquer toute lecture de données dans la mémoire tampon circulaire 16 si le pointeur de lecture PL atteint le pointeur d'écriture PE (indication que la mémoire est vide), et
- débloquer l'écriture de données dans la mémoire tampon circulaire 16 si celle-ci était bloquée et que le pointeur de lecture PL dépasse de nouveau le pointeur d'écriture PE.

De cette façon, le module 24 de gestion des écritures remplit une fonction de blocage en écriture lorsque la mémoire 16 est pleine et de déblocage en lecture lorsque la mémoire vide se remplit de nouveau. Le module 30 de gestion des lectures remplit une fonction de blocage en lecture lorsque la mémoire 16 est vide et de déblocage en écriture lorsque la mémoire pleine se vide de nouveau.

Le fonctionnement détaillé ci-dessus des modules 24 et 30 de gestion des écritures et lectures n'est qu'un exemple de mise en oeuvre des moyens de blocage en écriture et en lecture dans la mémoire tampon circulaire 16 à l'aide des pointeurs de lecture et d'écriture PL et PE, mais il apparaîtra à l'homme du métier que d'autres implémentations ou variantes sont envisageables pour rendre la mémoire tampon circulaire 16 à lectures et écritures bloquantes en fonction de la valeur des pointeurs de lecture et d'écriture PL et PE.

Ces caractéristiques rendent le contrôleur DMA 10 ou 20 capable de synchroniser le flux entrant de données en provenance de la source 12 et le flux sortant vers le destinataire 14.

Il en résulte un avantage illustré sur la figure 2. Sur cette figure, un circuit intégré 50 comporte un microprocesseur 52, la source de données 12 qui est par exemple une mémoire locale de stockage temporaire des données traitées ou utilisées par le microprocesseur 52, le destinataire 14 qui est par exemple un périphérique ou opérateur fonctionnel quelconque et le contrôleur DMA conforme à sa variante de réalisation 20 incluant la mémoire tampon circulaire 16. Tous ces éléments 52, 12, 14 et 20 sont reliés entre eux par un bus 54 de transmission de données classique.

En fonctionnement normal du microprocesseur 52 et du contrôleur DMA 20, le microprocesseur transfère des données vers la source 12 (étape B), par exemple dans une mémoire tampon de celle-ci, indépendamment des transferts réalisés par le contrôleur DMA entre la source 12 et le destinataire 14 (étape C). Ceci est en effet rendu possible par la fonction de synchronisation que peut remplir le contrôleur DMA 20 tel que décrit précédemment, grâce à sa mémoire tampon circulaire 16 à écritures et lectures bloquantes.

En revanche, si le contrôleur DMA 20 ne pouvait pas remplir cette fonction, un protocole classique de requêtes (étape A) et d'acquittements (étape D) devrait être mis en oeuvre entre le microprocesseur 52 et le contrôleur DMA 20, associé à une écriture par blocs de données entre le microprocesseur 52 et la source 12. Le transfert de données entre la source 12 et le destinataire 14 serait ainsi réalisé par la succession des étapes suivantes :
- transmission A par le microprocesseur 52 d'une requête de transfert d'un bloc de données au contrôleur DMA,
- transmission B du bloc de données du microprocesseur 52 vers la mémoire tampon définie à cet effet dans la source 12,
- transfert C du bloc de données par le contrôleur DMA de la source 12 vers le destinataire 14,
- transmission D par le contrôleur DMA d'un acquittement au microprocesseur 52 pour permettre l'envoi d'un nouveau bloc de données.

Il apparaît donc clairement que le contrôleur DMA 20 tel que décrit précédemment, prévoyant une synchronisation au niveau de chaque donnée transférée, permet de simplifier les étapes du transfert des données notamment en se passant des étapes A et D.

En combinaison avec cette fonction de synchronisation, il est possible, dans un mode de réalisation de l'invention, de prévoir un micrologiciel (par exemple le micrologiciel 40) conçu pour mettre à jour au moins l'un des pointeurs de lecture et d'écriture associés à la mémoire tampon circulaire 16 selon une logique de mise à jour prédéterminée pour ajouter de la souplesse dans les opérations de lecture ou d'écriture. Dans ce cas, pour ne pas perdre la capacité de synchronisation du contrôleur DMA 10 ou 20, il convient de définir un nouveau pointeur de lecture ou d'écriture, dit pointeur de travail et portant la référence PT sur les figures 3A et 3B. Ce pointeur de travail est différent des pointeurs d'écriture et de lecture PE et PL définis précédemment. Comme eux, il est stocké dans les moyens de stockage 38. Il est variable et destiné à être mis à jour par le micrologiciel 40 après chaque opération de lecture ou d'écriture qu'il réalise.

En particulier, le micrologiciel 40 peut être défini pour que la logique de mise à jour du pointeur de travail PT comporte au moins un saut d'adresse dans la mémoire tampon circulaire 16. En introduisant ce nouveau pointeur PT et le micrologiciel associé 40 qui permet par exemple son déplacement par sauts d'adresses, en avant ou en arrière comme illustré sur la figure 3A, dans la mémoire tampon circulaire 16, celle-ci dont le contrôleur DMA 10 ou 20 gère le suivi des lectures et écritures n'est pas utilisée comme une simple liste de type FIFO. Elle permet au contrôleur DMA 10 ou 20 de réordonner lui-même la séquence des données à transférer entre la source 12 et le destinataire 14.

Dans une variante de réalisation préférée, le pointeur de travail PT est un pointeur de lecture.

Dans cette variante, le premier pointeur de lecture PL est un pointeur de lecture à libération d'espace mémoire pour l'écriture de données. En d'autre termes, chaque fois qu'il est mis à jour, l'espace mémoire compris entre l'emplacement de l'ancienne adresse pointée et l'emplacement précédant celui de la nouvelle adresse pointée par ce premier pointeur de lecture PL est automatiquement libéré pour l'écriture. Cela vient du fait que, comme indiqué précédemment, l'espace mémoire situé dans la mémoire tampon circulaire 16 entre l'adresse du pointeur d'écriture PE et l'adresse précédant celle du pointeur de lecture PL dans le sens de la base vers le sommet est considéré par principe comme un espace libre pour l'écriture.

Le pointeur de travail PT est, quant à lui, un pointeur de lecture à conservation des données lues. Autrement dit, lorsqu'une donnée doit être lue dans la mémoire tampon circulaire 16 pour être transmise au destinataire 14, elle est lue à l'adresse indiquée par le pointeur de travail PT, mais la mise à jour du pointeur de travail PT après cette lecture ne libère pas l'emplacement élémentaire correspondant pour l'écriture. En effet, les déplacements en lecture du pointeur de travail PT ne sont pas nécessairement incrémentaux : ils sont librement prédéterminés par le micrologiciel 40 dans un ordre arbitraire, de préférence entre le premier pointeur de lecture PL et le pointeur d'écriture PE. Selon les applications, une donnée lue une première fois par le pointeur de travail PT peut notamment être relue et les données peuvent être lues dans un ordre différent de celui de leur stockage dans la mémoire tampon circulaire 16 : c'est donc uniquement une mise à jour du premier pointeur de lecture qui peut libérer de l'espace mémoire.

Par exemple, dans une application de transmission d'un flux de données vidéo conforme au standard MPEG 2 ou 4 (de l'Anglais « Moving Picture Expert Group »), pour huit lignes de coefficients vidéo stockées dans la mémoire tampon circulaire 16, le micrologiciel 40 peut comporter des instructions pour déplacer le pointeur de travail PT de macrobloc 8x8 en macrobloc 8x8 et selon un ordre prédéterminé dans chaque macrobloc. Lorsque tous les macroblocs de ces huit lignes ont été lus par le pointeur de travail PT, les huit lignes de coefficients vidéo sont alors libérées dans la mémoire tampon par une mise à jour microprogrammée du premier pointeur de lecture PL.

On note donc que dans cette variante de réalisation où le pointeur de travail PT est un pointeur de lecture, le micrologiciel 40 comporte des instructions, exécutées par le module 30 de gestion des lectures pour la mise à jour des deux pointeurs de lecture :
- des instructions pouvant inclure des sauts d'adresse en avant et/ou en arrière selon l'application visée pour le pointeur de travail PT,
- des instructions pouvant inclure des sauts d'adresse, mais uniquement en avant et en fonction des déplacements programmés pour le pointeur de travail PT, pour le premier pointeur de lecture PL.

En revanche, le micrologiciel 40 ne comporte pas d'instructions pour la mise à jour du pointeur d'écriture PE, celui-ci étant par exemple mis à jour par un séquenceur sans saut d'adresse et de façon incrémentale à chaque opération d'écriture d'une donnée dans la mémoire tampon circulaire 16.

On notera également que, comme illustré sur la figure 3A, les déplacements du pointeur de travail PT doivent être programmés pour qu'il pointe dans la zone de la mémoire tampon circulaire 16 qui comporte effectivement des données à lire. S'il pointe, après une mise à jour, à l'extérieur de cette zone, comme illustré sur la figure 3B, alors il peut être prévu selon les applications visées, soit d'engendrer un message d'erreur, soit de le bloquer à cette position jusqu'à ce que le pointeur d'écriture PE le rattrape.

Dans une variante de réalisation symétrique de la précédente, le pointeur de travail PT peut être un pointeur d'écriture.

Dans cette seconde variante, le pointeur d'écriture PE est un pointeur d'écriture à réservation d'espace mémoire pour l'écriture de données dans la mémoire tampon circulaire 16. En d'autre termes, chaque fois qu'il est mis à jour, l'espace mémoire compris entre l'emplacement de l'ancienne adresse pointée et l'emplacement précédant celui de la nouvelle adresse pointée par ce pointeur d'écriture PE est automatiquement réservé pour la lecture.

Le pointeur de travail PT est, quant à lui, un pointeur d'écriture effective à écriture de données dans un ordre quelconque prédéterminé dans l'espace mémoire réservé par le pointeur PE. Autrement dit, lorsqu'une donnée doit être écrite dans la mémoire tampon circulaire 16, elle l'est à l'adresse indiquée par le pointeur de travail PT, dont la mise à jour n'obéit pas nécessairement à une logique incrémentale. Ses déplacements sont librement prédéterminés par le micrologiciel 40 dans un ordre arbitraire dans l'espace mémoire réservé.

On note donc que dans cette seconde variante de réalisation où le pointeur de travail PT est un pointeur d'écriture, le micrologiciel 40 comporte des instructions, exécutées par le module 24 de gestion des écritures pour la mise à jour des deux pointeurs d'écriture :
- des instructions pouvant inclure des sauts d'adresse en avant et/ou en arrière selon l'application visée pour le pointeur de travail PT,
- des instructions pouvant inclure des sauts d'adresse, mais uniquement en avant et en fonction des déplacements programmés pour le pointeur de travail PT, pour le pointeur d'écriture PE.

En revanche, le micrologiciel 40 ne comporte pas d'instructions pour la mise à jour du pointeur de lecture PL, celui-ci étant par exemple mis à jour par un séquenceur sans saut d'adresse et de façon incrémentale à chaque opération de lecture d'une donnée dans la mémoire tampon circulaire 16.

Par ailleurs, en variante, le contrôleur d'accès direct en mémoire comporte à la fois un pointeur de travail d'écriture et un pointeur de travail de lecture.

Le contrôleur d'accès direct en mémoire comporte alors des moyens pour mettre à jour le pointeur de travail d'écriture après chaque écriture effectuée, ainsi que des moyens pour mettre à jour le pointeur de travail de lecture après chaque lecture effectuée selon une logique de mise à jour prédéterminée propre à chaque pointeur de travail et pouvant en particulier comprendre des déplacements par saut d'adresses en avant et/ou en arrière dans la mémoire tampon circulaire. Comme expliqué précédemment, les déplacements du pointeur de lecture doivent être programmés pour qu'il pointe dans la zone de la mémoire tampon circulaire réservée pour la lecture (zone définie depuis pointeur de lecture PL jusqu'à l'adresse précédant le pointeur d'écriture PE). De même, les déplacements du pointeur de travail d'écriture doivent être programmés pour qu'il pointe dans la zone de mémoire libre pour l'écriture (zone définie depuis le pointeur d'écriture PE jusqu'à l'adresse précédant le pointeur de lecture PL)

Un exemple de procédé de transfert de données pouvant être mis en oeuvre par le contrôleur DMA 10 ou 20 va maintenant être détaillé, dans le contexte de la première variante de réalisation précitée, dans laquelle le pointeur de travail PT est un pointeur de lecture à conservation des données lues. Les étapes successives de ce procédé sont illustrées sur la figure 4.

Au cours d'une première étape 100, le contrôleur 10 ou 20 est en attente d'une instruction de lecture ou d'écriture d'une donnée dans la mémoire tampon circulaire 16.

Cette étape 100 est suivie d'une étape 102 de déclenchement d'écriture, sur instruction d'écrire une donnée dans la mémoire tampon circulaire 16. Lors de cette étape de déclenchement d'écriture, le module 24 de gestion des écritures est activé. A titre d'exemple de réalisation non limitatif, il extrait des moyens de stockage 28 la valeur d'un premier descripteur indiquant si l'écriture dans la mémoire tampon circulaire 16 est bloquée ou non.

Ensuite, au cours d'une étape de test 104, selon la valeur de ce premier descripteur, il est décidé de poursuivre ou non l'écriture de la donnée considérée. Si le premier descripteur indique que l'écriture est bloquée, on passe de nouveau à l'étape 100, sinon on passe à une étape 106.

Au cours de l'étape 106, le module 24 de gestion des écritures extrait des moyens de stockage 28 l'adresse vers laquelle pointe le pointeur d'écriture PE. Il exécute alors l'écriture de la donnée considérée dans l'emplacement élémentaire correspondant.

Puis, au cours d'une étape 108 de mise à jour, l'adresse pointée par le pointeur d'écriture PE est incrémentée d'un emplacement élémentaire dans la mémoire tampon circulaire 16.

Enfin, lors d'une étape 110, le module 24 de gestion des écritures extrait des moyens de stockage 28 l'adresse vers laquelle pointe le premier pointeur de lecture PL puis met éventuellement à jour la valeur du premier descripteur de blocage des écritures et celle d'un second descripteur de blocage des lectures, dans les situations suivantes :
- si après la mise à jour de l'étape 108, l'adresse pointée par le pointeur d'écriture PE atteint celle pointée par le premier pointeur de lecture PL (indication que la mémoire 16 est pleine), modification du premier descripteur pour que ce dernier indique un blocage des écritures,
- si après la mise à jour de l'étape 108, l'adresse pointée par le pointeur d'écriture PE diffère de celle pointée par le premier pointeur de lecture PL alors que le second descripteur indique un blocage des lectures, modification du second descripteur pour ce dernier indique une autorisation des lectures.

L'étape 110 est suivie d'un retour à l'étape 100.

L'étape 100 est aussi suivie d'une étape 112 de déclenchement de lecture, sur instruction de lire une donnée dans la mémoire tampon circulaire 16. Lors de cette étape de déclenchement de lecture, le module 30 de gestion des lectures est activé. A titre d'exemple de réalisation non limitatif, il extrait des moyens de stockage 28 la valeur du second descripteur indiquant si la lecture dans la mémoire tampon circulaire 16 est bloquée ou non.

Ensuite, au cours d'une étape de test 114, le module 30 de gestion des lectures détermine si le destinataire 14 est prêt à recevoir la donnée considérée. Ce test peut être fait de plusieurs façons. Si le contrôleur DMA 10 ou 20 comporte le tampon de sortie 36, alors il peut être considéré qu'un transfert de donnée peut être effectué tant que ce tampon de sortie 36 n'est pas plein. A défaut, un protocole de communication classique peut prévoir que le destinataire 14 informe le contrôleur DMA 10 ou 20 de sa capacité à recevoir des données par des messages au format prédéterminé. Si le transfert de la donnée au destinataire 14 n'est pas possible, on passe de nouveau à l'étape 100, sinon on passe à une autre étape de test 116.

Au cours de cette étape de test 116, selon la valeur du second descripteur, il est décidé de poursuivre ou non la lecture de la donnée considérée. Si le second descripteur indique que la lecture est bloquée, on passe de nouveau à l'étape 100, sinon on passe à une étape de lecture 118.

Au cours de cette étape 118, le module 30 de gestion des lectures extrait des moyens de stockage 28 l'adresse vers laquelle pointe le pointeur de travail PT. Il exécute alors la lecture de la donnée considérée dans l'emplacement élémentaire correspondant.

Puis, au cours d'une étape 120 de mise à jour, l'adresse pointée par le pointeur de travail PT est mise à jour, soit vers l'avant, soit vers l'arrière, d'un ou plusieurs emplacements élémentaires, par le module 30 de gestion des lectures en fonction des instructions du micrologiciel 40. Si cela est aussi prévu par les instructions du micrologiciel 40, le premier pointeur de lecture PL peut être mis à jour également à cette étape, vers l'avant et d'un ou plusieurs emplacements élémentaires.

Enfin, lors d'une étape 122, le module 30 de gestion des lectures met éventuellement à jour la valeur du premier descripteur de blocage des écritures et celle du second descripteur de blocage des lectures, dans les situations suivantes :
- si après la mise à jour de l'étape 120, l'adresse pointée par le premier pointeur de lecture PL atteint celle pointée par le pointeur d'écriture PE (indication que la mémoire 16 est vide), modification du second descripteur pour que ce dernier indique un blocage des lectures,
- si après la mise à jour de l'étape 120, l'adresse pointée par le premier pointeur de lecture PL diffère de celle pointée par le pointeur d'écriture PE alors que le premier descripteur indique un blocage des écritures, modification du premier descripteur pour que ce dernier indique une autorisation des écritures.

L'étape 122 est suivie d'un retour à l'étape 100.

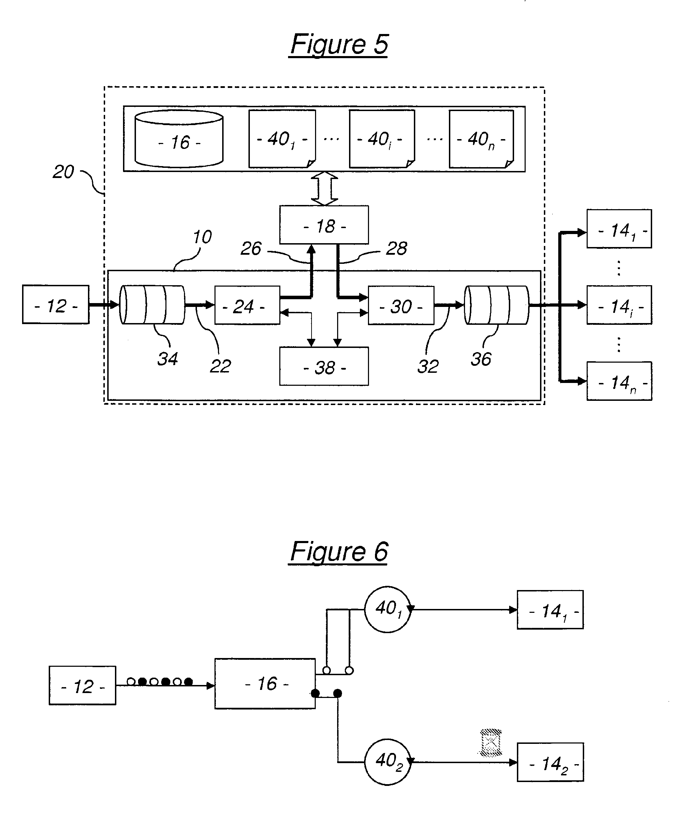

Un contrôleur d'accès direct en mémoire selon un second mode de réalisation de l'invention est représenté sur la figure 5. Les éléments identiques au premier mode de réalisation portent les mêmes références. Dans ce second mode de réalisation, le contrôleur DMA 10 a pour fonction de transférer des données depuis la source de données 12 vers plusieurs destinataires 14₁, ..., 14ᵢ, ..., 14ₙ de ces données via la mémoire tampon 16.

Pour la mise en oeuvre de l'invention, il est nécessaire que le contrôleur DMA 10 ait accès à la mémoire tampon 1016 en écriture et optionnel qu'il y ait accès en lecture. Dans l'exemple illustré sur la figure 5, il est apte à accéder en écriture et en lecture des données aux emplacements élémentaires de la mémoire tampon 16 par l'intermédiaire du module de commande 18. On notera que dans une variante de réalisation, le contrôleur DMA, portant alors la référence 20, inclut le support de stockage intégrant la mémoire tampon 16 et le module 18 de commande des accès en écriture et en lecture. En pratique, il peut se présenter sous la forme d'un système sur puce autonome, par exemple un circuit intégré de type CMOS.

Le contrôleur DMA 10 ou 20 émet chaque donnée reçue de la source 12 vers la mémoire tampon 16, chaque donnée destinée à être transmise à l'un des destinataires 14₁, ..., 14ᵢ, ..., 14ₙ étant ensuite lue dans la mémoire tampon 16 par le contrôleur DMA 10 ou 20. La mémoire tampon 16 remplit ainsi une fonction de tampon intermédiaire entre la source 12 et les destinataires 14₁, ..., 14ᵢ, ..., 14ₙ.

On notera que dans un autre mode de réalisation possible de l'invention non illustré, lorsque le contrôleur DMA 10 n'intègre pas la mémoire tampon 16 et qu'en outre il n'a pas lui-même d'accès en lecture des données dans la mémoire tampon 16, ce sont les destinataires 14₁, ..., 14ᵢ, ..., 14ₙ qui vont lire directement dans la mémoire tampon 16 les données qui leur sont destinées. Mais, dans ce cas, de façon classique et non détaillée, même si les données ne transitent pas par le contrôleur DMA 10, celui-ci conserve tout de même un mécanisme de déclenchement des lectures par les destinataires.

Dans ce second mode de réalisation, les moyens de stockage 38 comporte, à la place de l'unique pointeur de lecture du premier mode de réalisation, plusieurs pointeurs de lecture PL1, ..., PLi, ..., PLn chacun associé à un destinataire respectif 14₁, ..., 14ᵢ, ..., 14ₙ. Chaque pointeur de lecture PLi pointe vers une adresse d'emplacement élémentaire de la mémoire tampon circulaire 16 où une prochaine donnée peut être lue pour être transmise au destinataire 14ᵢ.

Puisque la mémoire tampon 16 est une mémoire circulaire dont la taille est définie par le nombre d'emplacements élémentaires compris entre les adresses de base et de sommet désignées par les pointeurs PB et PS, chaque emplacement élémentaire de cette mémoire vers lequel peuvent pointer les pointeurs d'écriture et de lecture PE et PL1, ..., PLi, ..., PLn est identifié par une adresse comprise entre l'adresse de base et l'adresse de sommet.

Les pointeurs de base et de sommet PB et PS sont prédéterminés et destinés à rester constants alors que les pointeurs d'écriture PE, respectivement de lecture PL1, ..., PLi, ..., PLn, sont variables. Ils peuvent en fait être mis à jour par incrémentation avec ou sans saut d'adresses définissant ainsi un sens des mises à jour.

Le pointeur d'écriture PE est par exemple plus précisément destiné à être mis à jour par incrémentation d'un emplacement élémentaire dans le sens de la base vers le sommet, suite à une opération d'écriture dans la mémoire tampon circulaire.

En revanche, les pointeurs de lecture PL1, ..., PLi, ..., PLn sont mis à jour respectivement par l'exécution de micrologiciels 40₁, ..., 40ᵢ, ..., 40ₙ. Leur mise à jour est prédéterminée pour que chaque pointeur de lecture PLi pointe vers un emplacement élémentaire dans lequel est stocké une donnée effectivement destinée à être transférée au destinataire correspondant 14ᵢ. Les micrologiciels 40₁, ..., 40ᵢ, ..., 40ₙ sont par exemple stockés dans le même support de stockage que la mémoire tampon circulaire 16. Ils sont, d'une façon générale, exécutés par un module de gestion des lectures dans la mémoire tampon circulaire 16, que celui-ci soit interne ou externe au contrôleur DMA. Dans l'exemple particulier de la figure 5, ils sont plus précisément exécutés par le module 30 de gestion des lectures du contrôleur DMA 10 ou 20.

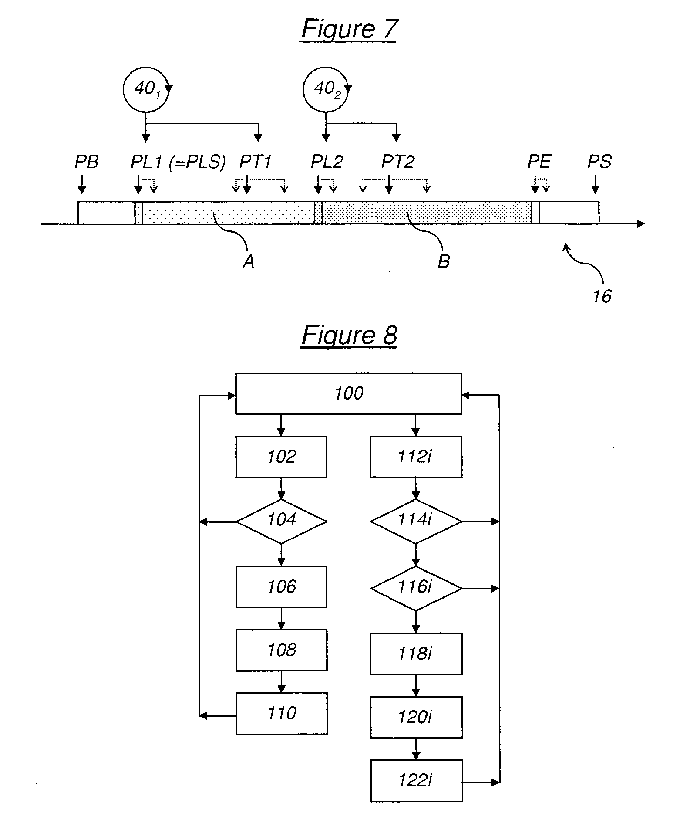

Les données stockées temporairement dans la mémoire tampon circulaire 16 en attendant d'être lues, soit par le contrôleur DMA 10 ou 20 pour être transmises aux destinataires 14₁, ..., 14_{i,} ..., 14ₙ, soit directement par les destinataires 14_{1,} ..., 14_{i,} ..., 14ₙ, sont situées entre l'adresse du pointeur de lecture PLi le moins avancé par rapport au pointeur d'écriture compte tenu du sens des mises à jour et l'adresse précédant celle du pointeur d'écriture PE, dans le sens de la base vers le sommet. En revanche, l'espace mémoire situé dans la mémoire tampon circulaire entre l'adresse du pointeur d'écriture PE et l'adresse précédant celle du pointeur de lecture PLi le moins avancé par rapport au pointeur d'écriture, dans le sens de la base vers le sommet, est un espace libre pour l'écriture. Cette structure de la mémoire tampon circulaire 16 associée aux descripteurs PB, PS, PE et PL1, ..., PLi, ..., PLn est illustrée sur la figure 7 qui sera détaillée ultérieurement.

Le fonctionnement avantageux du contrôleur d'accès direct en mémoire 10 ou 20 de la figure 5 est illustré sur la figure 6, dans une application particulière, simple mais non limitative. Selon cette application, la source 12 fournit une séquence de données alternant des données (points blancs) destinées à être transférées à un destinataire 14₁ et des données (points noirs) destinées à être transférées à un destinataire 14₂.

Grâce à la mise à jour incrémentale adresse par adresse du pointeur d'écriture PE, ces données sont stockées dans la mémoire tampon circulaire 16 dans l'ordre de la séquence fournie par la source 12.

Les données destinées à être transférées vers le destinataire 14₁ sont lues dans la mémoire tampon circulaire 16 grâce à l'exécution d'un micrologiciel 40₁ de mise à jour d'un pointeur de lecture PL1 pointant à chaque instant vers l'emplacement élémentaire de la prochaine donnée à lire pour le destinataire 14₁. La logique de mise à jour appliquée par ce micrologiciel 40₁ pour l'application visée est donc d'incrémenter le pointeur de lecture PL1 en sautant une adresse à chaque lecture de donnée effectuée pour le destinataire 14₁ de manière à ne pas lire de données affectées au destinataire 14₂.

De même, les données destinées à être transférées vers le destinataire 14₂ sont lues dans la mémoire tampon circulaire 16 grâce à l'exécution d'un micrologiciel 40₂ de mise à jour d'un pointeur de lecture PL2 pointant à chaque instant vers l'emplacement élémentaire de la prochaine donnée à lire pour le destinataire 14₂. La logique de mise à jour appliquée par ce micrologiciel 40₂ est aussi d'incrémenter le pointeur de lecture PL2 en sautant une adresse à chaque lecture de donnée effectuée pour le destinataire 14₂ de manière à ne pas lire de données affectées au destinataire 14₁.

Les deux micrologiciels 40₁ et 40₂ étant indépendants et pouvant donc être exécutés en parallèle par le contrôleur DMA 10 ou 20, le blocage de l'un des deux, notamment parce que le destinataire correspondant bloque en lecture, n'affecte pas l'autre. Il apparaît donc clairement que le contrôleur DMA est ainsi capable de gérer simplement et efficacement le transfert de données vers plusieurs destinataires sans que l'un d'entre eux ne puisse bloquer à lui seul le transfert de toutes les données.

En combinaison avec cette fonction de transfert sans blocage par l'un des destinataires, il est possible, dans un mode de réalisation particulier de l'invention, de prévoir que le contrôleur DMA puisse également remplir une fonction de synchronisation des flux entrant et sortant.

Pour mettre en oeuvre ce mode de réalisation particulier, il est nécessaire que le contrôleur DMA comporte le module 30 de gestion des lectures défini précédemment. Dans ce cas, ce module 30 de gestion des lectures peut être programmé pour :
- sélectionner, parmi l'ensemble des pointeurs de lecture PL1, ..., PLi, ..., PLn, le pointeur de lecture noté PLS indiquant l'emplacement élémentaire le moins avancé par rapport à l'emplacement élémentaire indiqué par le pointeur d'écriture PE compte tenu du sens prédéterminé des mises à jour, et
- effectuer cette sélection à chaque mise à jour de l'un quelconque des pointeurs de lecture PL1, ..., PLi, ..., PLn suite à une lecture de donnée faite pour l'un quelconque des destinataires.

Sur la base de ces considérations, le module 24 de gestion des écritures de données est conçu pour permettre ou bloquer l'écriture d'une donnée dans la mémoire tampon circulaire 16 en fonction notamment des valeurs relatives du pointeur d'écriture PE et du pointeur de lecture sélectionné PLS. Il est également conçu pour mettre à jour le pointeur d'écriture PE de façon automatique à l'aide d'un séquenceur en l'incrémentant d'un emplacement élémentaire. Plus précisément, dans une variante simple de ce mode de réalisation particulier de l'invention, une donnée à écrire dans la mémoire tampon circulaire 16 doit être écrite à l'adresse indiquée par le pointeur d'écriture PE ; son écriture doit être bloquée si une mise à jour du pointeur d'écriture PE réalisée précédemment par le module 24 de gestion des écritures fait que l'adresse vers laquelle il pointe atteint ou dépasse l'adresse vers laquelle pointe le pointeur de lecture sélectionné PLS (mémoire pleine).

Sur la base de ces mêmes considérations, le module 30 de gestion des lectures de données est conçu pour permettre ou bloquer la lecture d'une donnée dans la mémoire tampon circulaire 16 en fonction notamment des valeurs relatives du pointeur d'écriture PE et du pointeur de lecture sélectionné PLS. Il est également conçu pour mettre à jour chaque pointeur de lecture PLi par l'exécution de chaque micrologiciel 40ᵢ. Plus précisément, dans une variante simple de ce mode de réalisation particulier de l'invention, une donnée à lire dans la mémoire tampon circulaire 16 pour un destinataire 14ᵢ doit être lue à l'adresse indiquée par le pointeur de lecture PLi ; sa lecture doit être bloquée si une mise à jour du pointeur de lecture PLi réalisée précédemment par le module 30 de gestion des lectures fait que l'adresse vers laquelle pointe le pointeur de lecture sélectionné PLS atteint ou dépasse l'adresse vers laquelle pointe le pointeur d'écriture PE (mémoire vide).

Concrètement, pour que les blocages et déblocages en lecture et écriture dans la mémoire tampon circulaire 16 fonctionnent comme indiqué ci-dessus, le module 24 de gestion des écritures peut être programmé pour, après chaque mise à jour du pointeur d'écriture PE :
- bloquer toute écriture de données dans la mémoire tampon circulaire 16 si le pointeur d'écriture PE atteint le pointeur de lecture sélectionné PLS (indication que la mémoire est pleine), et
- débloquer la lecture de données dans la mémoire tampon circulaire 16 si celle-ci était bloquée et que le pointeur d'écriture PE dépasse de nouveau le pointeur de lecture sélectionné PLS.

De même, le module 30 de gestion des lectures peut être programmé pour, après chaque mise à jour d'un pointeur de lecture PLi :
- bloquer toute lecture de données dans la mémoire tampon circulaire 16 si le pointeur de lecture sélectionné PLS atteint le pointeur d'écriture PE (indication que la mémoire est vide), et
- débloquer l'écriture de données dans la mémoire tampon circulaire 16 si celle-ci était bloquée et que le pointeur de lecture sélectionné PLS dépasse de nouveau le pointeur de lecture PE.

De cette façon, le module 24 de gestion des écritures remplit une fonction de blocage en écriture lorsque la mémoire 16 est pleine et de déblocage en lecture lorsque la mémoire vide se remplit de nouveau. Le module 30 de gestion des lectures remplit une fonction de blocage en lecture lorsque la mémoire 16 est vide et de déblocage en écriture lorsque la mémoire pleine se vide de nouveau.

Le fonctionnement détaillé ci-dessus des modules 24 et 30 de gestion des écritures et lectures n'est qu'un exemple de mise en oeuvre des moyens de blocage en écriture et en lecture dans la mémoire tampon circulaire 16 à l'aide des pointeurs d'écriture et de lecture PE et PL1, ..., PLi, ..., PLn. Mais il apparaîtra à l'homme du métier que d'autres implémentations ou variantes sont envisageables pour rendre la mémoire tampon circulaire 16 à lectures et écritures bloquantes en fonction de la valeur des pointeurs d'écriture et de lecture PE et PL1, ..., PLi, ..., PLn.

Ces caractéristiques rendent le contrôleur DMA 10 ou 20 capable de synchroniser le flux entrant de données en provenance de la source 1012 et les flux sortant vers les destinataires 14_{1,} ..., 14_{i,} ..., 14ₙ.

Il en résulte que, dans un circuit intégré comportant un microprocesseur, la source de données 12 qui est par exemple une mémoire locale de stockage temporaire des données traitées ou utilisées par le microprocesseur, les destinataires 14₁, ..., 14ᵢ, ..., 14ₙ qui sont par exemple des périphériques ou opérateurs fonctionnels quelconques et le contrôleur DMA conforme à sa variante de réalisation 20 incluant la mémoire tampon circulaire 16, le microprocesseur peut transférer des données vers la source 12 indépendamment des transferts réalisés par le contrôleur DMA entre la source 12 et les destinataires 14₁, ..., 14ᵢ, ..., 14ₙ.

En combinaison avec cette fonction de synchronisation du contrôleur DMA, selon une première variante, on définit pour chaque destinataire 14ᵢ un nouveau pointeur de lecture, dit « pointeur de travail ». Pour chaque destinataire 14ᵢ, ce pointeur de travail est différent du pointeur de lecture PLi défini précédemment. Comme lui, il est stocké dans les moyens de stockage 38. Il est variable et destiné à être mis à jour par le micrologiciel 40 après chaque opération de lecture qu'il réalise. Sur la figure 7 qui illustre un mode de réalisation simple à deux destinataires 14₁ et 14_{2,} deux pointeurs de travail PT1 et PT2 s'ajoutent au pointeur d'écriture PE et aux pointeurs de lecture PL1 et PL2.

Le micrologiciel 40ᵢ est ainsi défini pour que la logique de mise à jour du pointeur de travail PTi permette de lire les données destinées au destinataire 14ᵢ dans un ordre qui n'est pas celui de la séquence transmise par la source 12. En introduisant ce nouveau pointeur PTi pour chaque destinataire 14ᵢ et la possibilité de le mettre à jour par sauts d'adresses en avant et en arrière comme illustré sur la figure 7, dans la mémoire tampon circulaire 16 et plus précisément dans la liste de données affectées au destinataire 14ᵢ, celle-ci n'est pas utilisée comme une simple liste de type FIFO. Les pointeurs de travail PT1, ..., PTi, ..., PTn permettent au contrôleur DMA 10 ou 20 de réordonner lui-même chaque séquence des données à transférer entre la source 12 et l'un quelconque des destinataires 14₁, ..., 14_{i,} ..., 14ₙ.

Dans cette première variante, le pointeur de lecture sélectionné PLS est alors un pointeur de lecture à libération d'espace mémoire pour l'écriture de données. En d'autre termes, à chaque sélection de l'un des pointeurs de lecture comme pointeur de lecture sélectionné, l'espace mémoire compris entre l'emplacement de l'ancienne adresse pointée et l'emplacement précédant celui de la nouvelle adresse pointée par le pointeur de lecture sélectionné PLS est automatiquement libéré pour l'écriture. Cela vient du fait que, comme indiqué précédemment, l'espace mémoire situé dans la mémoire tampon circulaire 16 entre l'adresse du pointeur d'écriture PE et l'adresse précédant celle du pointeur de lecture sélectionné PLS dans le sens de la base vers le sommet est considéré par principe comme un espace libre pour l'écriture.

Dans l'exemple simple de la figure 7, c'est le pointeur de lecture PL1 qui est le moins avancé par rapport au pointeur d'écriture PE. C'est donc lui qui est sélectionné et également pris comme référence pour définir le début de l'espace mémoire stockant des données devant être lues et transférées vers les destinataires. Plus précisément, l'espace mémoire portant la référence A désigne une zone de mémoire dans laquelle se trouvent des données affectées au destinataire 14₁ qui n'ont pas encore été lues et des données affectées au destinataire 14₂ qui ont été lues : cette zone n'est pas encore libre en écriture. L'espace mémoire portant la référence B désigne une zone de mémoire dans laquelle se trouvent des données affectées aux destinataires 14₁ et 14₂ qui n'ont pas encore été lues : cette zone n'est a fortiori pas non plus libre en écriture.

Chaque pointeur de travail PTi est, quant à lui, un pointeur de lecture à conservation des données lues. Autrement dit, lorsqu'une donnée doit être lue dans la mémoire tampon circulaire 16 pour être transmise au destinataire 14_{i,} elle est lue à l'adresse indiquée par le pointeur de travail PTi, mais la mise à jour du pointeur de travail PTi après cette lecture ne libère pas l'emplacement élémentaire correspondant pour l'écriture. En effet, les déplacements en lecture du pointeur de travail PTi ne suivent pas nécessairement la séquence des données affectées au destinataire 14ᵢ dans l'ordre croissant des adresses. Ils sont librement prédéterminés par le micrologiciel 40ᵢ dans un ordre arbitraire, de préférence entre le pointeur de lecture PLi et le pointeur d'écriture PE. Selon les applications, une donnée lue une première fois par le pointeur de travail PTi peut notamment être relue et les données peuvent être lues dans un ordre différent de celui de leur stockage dans la mémoire tampon circulaire 16.

On note donc que dans cette variante de réalisation où chaque pointeur de travail PTi est un pointeur de lecture, chaque micrologiciel 40ᵢ comporte des instructions, exécutées par le module 30 de gestion des lectures, pour la mise à jour des deux pointeurs de lecture associés au destinataire 14ᵢ :
- des instructions pouvant inclure des sauts d'adresse en avant et/ou en arrière selon l'application visée pour le pointeur de travail PTi,
- des instructions pouvant inclure des sauts d'adresse, mais uniquement en avant, en fonction des adresses où se trouvent les données affectées au destinataire 14ᵢ et en fonction des déplacements programmés pour le pointeur de travail PTi, pour le pointeur de lecture PLi.

En revanche, aucun des micrologiciels 40₁, ..., 40ᵢ, ..., 40ₙ ne comporte d'instructions pour la mise à jour du pointeur d'écriture PE, celui-ci étant par exemple mis à jour par un séquenceur sans saut d'adresse et de façon incrémentale à chaque opération d'écriture d'une donnée dans la mémoire tampon circulaire 16.

On notera également que, comme illustré sur la figure 7, les déplacements des pointeurs de travail PT1, ..., PTi, ..., PTn doivent être programmés pour qu'ils pointent dans la zone de la mémoire tampon circulaire 16 qui comporte effectivement des données à lire respectivement pour les destinataires 14₁, ..., 14_{i,} ..., 14ₙ. S'il l'un d'entre eux pointe, après une mise à jour, à l'extérieur de cette zone, alors il peut être prévu selon les applications visées, soit d'engendrer un message d'erreur, soit de le bloquer à cette position jusqu'à ce que le pointeur d'écriture PE le rattrape. Conformément à l'invention, cela bloque l'exécution du micrologiciel 40ᵢ correspondant au pointeur de travail PTi bloqué, mais cela ne bloque pas l'exécution de tout autre micrologiciel 40ⱼ associé à un autre destinataire 14ⱼ.

Dans une variante de réalisation symétrique de la précédente, pour réordonner la séquence de données, on définit un unique pointeur de travail PT en tant que pointeur d'écriture.

Dans cette seconde variante, le pointeur d'écriture PE est un pointeur d'écriture à réservation d'espace mémoire pour l'écriture de données dans la mémoire tampon circulaire 16. En d'autre termes, chaque fois qu'il est mis à jour, l'espace mémoire compris entre l'emplacement de l'ancienne adresse pointée et l'emplacement précédant celui de la nouvelle adresse pointée par ce pointeur d'écriture PE est automatiquement réservé pour la lecture. Le pointeur de travail PT est, quant à lui, un pointeur d'écriture effective à écriture de données dans un ordre quelconque prédéterminé dans l'espace mémoire réservé par le pointeur PE.

Mais cette seconde variante est moins intéressante à envisager que la précédente parce qu'elle est susceptible d'engendrer des blocages du côté de l'écriture des données dans la mémoire tampon circulaire 16. Or, dans une application de transfert de données par un contrôleur DMA, on préfère gérer des blocages en aval, du côté des lectures dans la mémoire tampon circulaire, plutôt qu'en amont, côté écriture.

Un exemple de procédé de transfert de données vers plusieurs destinataires 14ᵢ va maintenant être détaillé, dans le contexte de la première variante de réalisation précitée, dans laquelle le contrôleur DMA est à gestion en écriture et lecture bloquantes de la mémoire tampon circulaire 16 et dans laquelle des pointeurs de travail PT1, ..., PTi, ..., PTn sont introduits en tant que pointeurs de lecture à conservation des données lues. Les étapes successives de ce procédé sont illustrées sur la figure 8.

Toutes les étapes sont identiques à celles de la figure 4, si ce n'est que les étapes 112 à 122 sont réalisées pour chaque pointeur de travail PT1, ..., PTi, ..., PTn, et sont de ce fait référencées 112i...122i. Plus précisément, chaque micrologiciel 40ᵢ prévoit l'exécution des étapes 112i à 122i, sachant que plusieurs micrologiciels peuvent être exécutés en parallèle, le blocage de l'un ne bloquant pas le ou les autres.

En outre, l'utilisation pour chaque destinataire d'un pointeur PTi associé à un pointeur de lecture PLi n'est pas indispensable, un unique pointeur de lecture PL peut être utilisé. Dans ce cas, et de façon similaire au cas où un seul pointeur de travail de lecture est utilisé, les déplacements de chaque pointeur de travail de lecture doivent être programmés pour qu'il pointe dans la zone de la mémoire tampon circulaire réservée pour la lecture (zone définie depuis pointeur de lecture PL jusqu'à l'adresse précédant le pointeur d'écriture PE).

De façon symétrique, on peut utiliser un unique pointeur d'écriture PE dans le cas où plusieurs pointeurs de travail d'écriture PTi sont utilisés pour des sources différentes. Les déplacements de chaque pointeur de travail d'écriture sont alors programmés pour qu'il pointe dans la zone de mémoire libre pour l'écriture (zone définie depuis le pointeur d'écriture PE jusqu'à l'adresse précédant le pointeur de lecture PL)

Il apparaît clairement que le contrôleur d'accès direct en mémoire décrit précédemment et son fonctionnement pour le transfert de données permettent non seulement de se passer d'une synchronisation entre un microprocesseur et le contrôleur qui lui est associé, mais aussi d'ajouter de la souplesse dans le transfert des données, notamment lorsque la séquence de données souhaitée par le destinataire n'est pas la même que celle fournie par la source. C'est par exemple une propriété utile dans des applications de traitement et transfert de données d'images ou de vidéo dans le contexte des standards MPEG.

Notamment, dans ce qui précède, pour simplifier la description il a été envisagé une application où le transfert se fait à partir d'une seule source vers un seul destinataire, mais le principe de l'invention s'applique de la même manière avec plusieurs sources et/ou plusieurs destinataires. De même, un contrôleur d'accès direct en mémoire selon l'invention peut gérer plusieurs mémoires tampon circulaires et donc plusieurs jeux de descripteurs (pointeurs, descripteurs de blocage, etc.) associés.

En outre, le contrôleur d'accès direct en mémoire pourrait également gérer, de la manière décrite précédemment, un ou plusieurs pointeurs d'écriture PE et un ou plusieurs pointeurs de lecture PL, mais également plusieurs pointeurs de travail PT de lecture et/ou d'écriture.

## Revendications

1. Contrôleur d'accès direct en mémoire (10, 20) pour le transfert de données depuis au moins une source (12) de données vers au moins un destinataire (14) de ces données, via une mémoire tampon circulaire (16), le contrôleur d'accès comportant :
- un module (24) de gestion d'écritures conçu pour écrire des données reçues de ladite au moins une source (12) dans la mémoire tampon circulaire (16),
- des moyens (38) de stockage d'un premier pointeur de lecture (PL) et d'un deuxième pointeur d'écriture (PE), ledit pointeur de lecture, respectivement d'écriture, indiquant un emplacement élémentaire de la mémoire tampon circulaire dans lequel une donnée peut être lue, respectivement écrite,
- un module (30) de gestion de lectures conçu pour lire des données stockées dans la mémoire tampon circulaire (16) et les transférer vers ledit au moins un destinataire (14),
- des moyens (24, 30, 40) de blocage en lecture, respectivement en écriture, dans la mémoire tampon circulaire (16) en fonction des positions des emplacements élémentaires indiqués par lesdits pointeurs de lecture et d'écriture,
- des moyens de stockage (38) d'un pointeur de travail (PT) de lecture ou d'écriture différent des premier et deuxième pointeurs (PL ; PE), et
- des moyens (24, 30, 40) de mise à jour du pointeur de travail (PT), après chaque lecture ou écriture effectuée par ce pointeur de travail (PT), selon une logique de mise à jour prédéterminée,
**caractérisé en ce que** la logique de mise à jour prédéterminée comporte des déplacements du pointeur de travail (PT) en avant ou en arrière dans la mémoire tampon circulaire (16), et **en ce qu'**il comprend des moyens de blocage du pointeur de travail de lecture ou d'écriture si le pointeur de travail (PT) de lecture pointe à l'extérieur d'un espace mémoire réservé à la lecture défini depuis le pointeur de lecture (PL) jusqu'à l'adresse précédant le pointeur d'écriture (PE), ou respectivement , si le pointeur de travail (PT) d'écriture pointe à l'extérieur d'un espace mémoire libre pour l'écriture défini depuis le pointeur d'écriture (PE) jusqu'à l'adresse précédant le pointeur de lecture (PL).

2. Contrôleur d'accès direct en mémoire (10, 20) selon la revendication 1, dans lequel les moyens de mise à jour du pointeur de travail comportent des moyens (24, 30) d'exécution d'un micrologiciel (40) de mise à jour.

3. Contrôleur d'accès direct en mémoire (10, 20) selon la revendication 1 ou 2, dans lequel la logique de mise à jour prédéterminée comporte au moins un saut d'adresse dans la mémoire tampon circulaire.

4. Contrôleur d'accès direct en mémoire (10, 20) selon l'une quelconque des revendications 1 à 3, dans lequel les moyens de blocage en lecture (30, 40) sont conçus pour bloquer toute lecture de donnée dans la mémoire tampon circulaire (16) lorsqu'une mise à jour du pointeur de lecture (PL) fait que l'adresse vers laquelle il pointe atteint ou dépasse l'adresse vers laquelle pointe le pointeur d'écriture (PE), et dans lequel les moyens de blocage en écriture (24, 40) sont conçus pour bloquer toute écriture de donnée dans la mémoire tampon circulaire (16) lorsqu'une mise à jour du pointeur d'écriture (PE) fait que l'adresse vers laquelle il pointe atteint ou dépasse l'adresse vers laquelle pointe le pointeur de lecture (PL).

5. Contrôleur d'accès direct en mémoire (10, 20) selon l'une quelconque des revendications 1 à 4, dans lequel le pointeur de lecture (PL) est un pointeur de lecture à libération d'espace mémoire pour l'écriture de données, et dans lequel le pointeur de travail (PT) est un pointeur de lecture à conservation de données lues.

6. Contrôleur d'accès direct en mémoire (10, 20) selon les revendications 2 et 5, dans lequel le micrologiciel (40) est conçu pour la mise à jour uniquement du premier pointeur de lecture (PL) et du pointeur de travail (PT) de lecture, le pointeur d'écriture (PE) étant mis à jour automatiquement par incrémentation sans saut d'adresse à chaque opération d'écriture d'une donnée dans la mémoire tampon circulaire (16).

7. Contrôleur d'accès direct en mémoire (10, 20) selon l'une quelconque des revendications 1 à 4, dans lequel le deuxième pointeur d'écriture (PE) est un pointeur d'écriture à réservation d'espace mémoire pour la lecture de données, et dans lequel le pointeur de travail (PT) est un pointeur d'écriture

8. Contrôleur d'accès direct en mémoire (10, 20) selon les revendications 2 et 7, dans lequel le micrologiciel (40) est conçu pour la mise à jour uniquement du deuxième pointeur d'écriture (PE) et du pointeur de travail (PT) en écriture, le pointeur de lecture (PL) étant mis à jour automatiquement par incrémentation sans saut d'adresse à chaque opération de lecture d'une donnée dans la mémoire tampon circulaire (16).

9. Contrôleur d'accès direct en mémoire (10, 20) selon l'une quelconque des revendications 1 à 8, pour le transfert de données vers plusieurs destinataires, dans lequel, pour chaque destinataire, les moyens de stockage (38) comportent un pointeur de travail de lecture (PT1, PT2), différent du premier pointeur de lecture (PL1, PL2), le contrôleur comportant des moyens (30) de mise à jour du pointeur de travail de lecture (PT1, PT2) de chaque destinataire (14_{1,} 14₂), et comprenant des moyens de blocage d'un pointeur de travail de lecture si celui-ci pointe à l'extérieur d'un espace mémoire réservé à la lecture défini depuis le premier pointeur de lecture (PL1, PL2) jusqu'à l'adresse précédant le pointeur d'écriture (PE),

10. Contrôleur d'accès direct en mémoire selon l'une quelconque des revendications 1 à 8, pour le transfert de données vers plusieurs destinataires, dans lequel, pour chaque destinataire, les moyens de stockage (38) comportent un premier pointeur de lecture (PL1, PL2) associé à un pointeur de travail de lecture, et comprenant des moyens de blocage de chaque pointeur de travail de lecture si celui-ci pointe à l'extérieur d'un espace mémoire réservé à la lecture défini depuis le premier pointeur de lecture (PL1, PL2) associé au pointeur de travail de lecture considéré jusqu'à l'adresse précédant le pointeur d'écriture (PE) .

11. Contrôleur d'accès direct en mémoire selon l'une quelconque des revendications 1 à 10, pour le transfert de données depuis plusieurs sources, dans lequel, pour chaque source, les moyens de stockage comportent un pointeur de travail d'écriture, différent du deuxième pointeur d'écriture et comprenant des moyens de blocage d'un pointeur de travail d'écriture si celui-ci pointe à l'extérieur d'un espace mémoire libre pour l'écriture défini depuis le deuxième pointeur d'écriture (PE) jusqu'à l'adresse précédant le premier pointeur de lecture (PL).

12. Contrôleur d'accès direct en mémoire selon l'une quelconque des revendications 1 à 10, pour le transfert de données depuis plusieurs sources, dans lequel, pour chaque source, les moyens de stockage (38) comportent un deuxième pointeur d'écriture associé à un pointeur de travail d'écriture, et comprenant des moyens de blocage de chaque pointeur de travail d'écriture si celui-ci pointe à l'extérieur d'un espace mémoire libre pour l'écriture défini depuis le deuxième pointeur d'écriture associé au pointeur de travail d'écriture considéré jusqu'à l'adresse précédant le premier pointeur de lecture (PL).

13. Contrôleur d'accès direct en mémoire selon l'une quelconque des revendications 1 à 8, dans lequel les moyens de stockage comportent, d'une part, un pointeur de travail d'écriture, différent du deuxième pointeur d'écriture, et, d'autre part, un pointeur de travail de lecture, différent du premier pointeur de lecture.

14. Contrôleur d'accès direct en mémoire selon l'une quelconque des revendications 1 à 13, dans lequel la logique de mise à jour prédéterminée comporte des déplacements du pointeur de travail (PT) en avant et en arrière dans la mémoire tampon circulaire (16).

15. Procédé de transfert de données depuis au moins une source (12) de données vers au moins un destinataire (14) de ces données par un contrôleur d'accès direct en mémoire (10, 20) selon l'une quelconque des revendications 1 à 14, comportant, chaque donnée reçue de la source (12) étant émise (106) par le contrôleur (10, 20) vers une mémoire tampon circulaire (16) et chaque donnée à transmettre au destinataire (14) étant lue (118) dans la mémoire tampon circulaire (16) par le contrôleur (10, 20), des étapes (110, 122) de blocage en lecture par le contrôleur dans la mémoire tampon circulaire et de blocage en écriture par le contrôleur dans la mémoire tampon circulaire en fonction des positions relatives des emplacements élémentaires indiqués par les pointeurs de lecture et d'écriture, **caractérisé en ce qu'**il comporte en outre les étapes suivantes :
- déplacements du pointeur de travail (PT) en avant ou en arrière dans la mémoire tampon circulaire (16),
- blocage du pointeur de travail de lecture ou d'écriture si le pointeur de travail (PT) de lecture pointe à l'extérieur d'un espace mémoire réservé à la lecture défini depuis le pointeur de lecture (PL) jusqu'à l'adresse précédent le pointeur d'écriture (PE), ou respectivement, si le pointeur de travail (PT) d'écriture pointe à l'extérieur d'un espace mémoire libre pour l'écriture défini depuis le pointeur d'écriture (PE) jusqu'à l'adresse précédant le pointeur de lecture (PL).

16. Programme d'ordinateur téléchargeable depuis un réseau de communication et/ou enregistré sur un support lisible par ordinateur et/ou exécutable par un contrôleur d'accès direct en mémoire (10, 20), **caractérisé en ce qu'**il comprend des instructions de code de programme pour l'exécution des étapes d'un procédé de transfert de données selon la revendication 15 lorsque ledit programme est exécuté par un contrôleur d'accès direct en mémoire.

## Patentansprüche

1. Direkt-Speicherzugriffssteuerung (10, 20) für das Übertragen von Daten von mindestens einer Quelle (12) von Daten an mindestens einen Empfänger (14) dieser Daten über einen Ringpufferspeicher (16), wobei die Zugriffssteuerung umfasst:
- ein Modul (24) zum Steuern von Schreibvorgängen, das ausgestaltet ist, die von der mindestens einen Quelle (12) empfangenen Daten in den Ringpufferspeicher (16) zu schreiben,
- Mittel (38) zum Speichern eines ersten Zeigers zum Lesen (PL) und eines zweiten Zeigers zum Schreiben (PE), wobei der Zeiger zum Lesen bzw. Schreiben eine elementare Speicherstelle des Ringpufferspeichers angibt, in der Daten gelesen bzw. in die Daten geschrieben werden können,
- ein Modul (30) zum Steuern von Lesevorgängen, das ausgestaltet ist, die in dem Ringpufferspeicher (16) gespeicherten Daten zu lesen und diese an den mindestens einen Empfänger (14) zu übertragen,
- Mittel (24, 30, 40) zum Blockieren des Lesens bzw. des Schreibens in dem Ringpufferspeicher (16) in Abhängigkeit von den Positionen der elementaren Speicherstellen, die durch diese Zeiger zum Lesen und Schreiben angegeben sind,
- Mittel (38) zum Speichern eines Arbeitszeigers (PT) zum Lesen oder Schreiben, der sich von dem ersten und dem zweiten Zeiger (PL; PE) unterscheidet, und
- Mittel (24, 30, 40) zum Aktuaüsieren des Arbeitszeigers (PT) nach jedem Lesen oder Schreiben, das von diesem Arbeitszeiger (PT) nach einer vorbestimmten Aktualisierungslogik ausgeführt wird,
**dadurch gekennzeichnet, dass** die vorbestimmte Aktualisierungslogik Verschiebungen des Arbeitszeigers (PT) nach vorn oder nach hinten in dem Ringpufferspeicher (16) umfasst, und dadurch, dass er Mittel zum Blockieren des Arbeitszeigers zum Lesen oder Schreiben umfasst, wenn der Arbeitszeiger (PT) zum Lesen auf außerhalb eines Speicherplatzes zeigt, der für das Lesen reserviert ist, definiert von dem Zeiger zum Lesen (PL) bis zu der Adresse, die dem Zeiger zum Schreiben (PE) vorausgeht, oder beziehungsweise, wenn der Arbeitszeiger (PT) zum Schreiben auf außerhalb eines freien Speicherplatzes zeigt, der für das Schreiben reserviert ist, definiert von dem Zeiger zum Schreiben (PE) bis zu der Adresse, die dem Zeiger zum Lesen (PL) vorausgeht.

2. Direkt-Speicherzugriffssteuerung (10, 20) nach Anspruch 1, bei der die Aktualisierungsmittel des Arbeitszeigers Mittel (24, 30) zum Ausführen einer Aktualisierungs-Firmware (40) umfassen.

3. Direkt-Speicherzugriffssteuerung (10, 20) nach Anspruch 1 oder 2, bei der die vorbestimmte Aktualisierungslogik mindestens einen Adressensprung in dem Ringpufferspeicher umfasst.

4. Direkt-Speicherzugriffssteuerung (10, 20) nach einem der Ansprüche 1 bis 3, bei der die Mittel zum Blockieren der Lesevorgänge (30, 40) ausgestaltet sind, jegliches Lesen von Daten in dem Ringpufferspeicher (16) zu blockieren, wenn ein Aktualisieren des Zeigers zum Lesen (PL) bewirkt, dass die Adresse, auf die er zeigt, die Adresse erreicht oder überschreitet, auf die der Zeiger zum Schreiben (PE) zeigt, und bei der die Mittel zum Blockieren der Schreibvorgänge (24, 40) ausgestaltet sind, jegliches Schreiben von Daten in den Ringpufferspeicher (16) zu blockieren, wenn ein Aktualisieren des Zeigers zum Schreiben (PE) bewirkt, dass die Adresse, auf die er zeigt, die Adresse erreicht oder überschreitet, auf die der Zeiger zum Lesen (PL) zeigt.

5. Direkt-Speicherzugriffssteuerung (10, 20) nach einem der Ansprüche 1 bis 4, bei der der Zeiger zum Lesen (PL) ein Zeiger zum Lesen zum Freigeben von Speichplatz für das Schreiben von Daten ist, und bei der der Arbeitszeiger (PT) ein Zeiger zum Lesen zum Behalten gelesener Daten ist.

6. Direkt-Speicherzugriffssteuerung (10, 20) nach den Ansprüchen 2 und 5, bei der die Firmware (40) nur für das Aktualisieren des ersten Zeigers zum Lesen (PL) und des Arbeitszeigers (PT) zum Lesen ausgestaltet ist, wobei der Zeiger zum Schreiben (PE) automatisch durch Inkrementieren ohne Adressensprung bei jedem Datenschreibvorgang in dem Ringpufferspeicher (16) aktualisiert wird.

7. Direkt-Speicherzugriffssteuerung (10, 20) nach einem der Ansprüche 1 bis 4, bei der der zweite Zeiger zum Schreiben (PE) ein Zeiger zum Schreiben für das Reservieren von Speicherplatz für das Lesen von Daten ist, und bei der der Arbeitszeiger (PT) ein Zeiger zum Schreiben ist.

8. Direkt-Speicherzugriffssteuerung (10, 20) nach Ansprüchen 2 und 7, bei der die Firmware (40) nur für das Aktualisieren des zweiten Zeigers zum Schreiben (PE) und des Arbeitszeigers (PT) zum Schreiben ausgestaltet ist, wobei der Zeiger zum Lesen (PL) automatisch durch Inkrementieren ohne Adressensprung bei jedem Datenlesevorgang in dem Ringpufferspeicher (16) aktualisiert wird.

9. Direkt-Speicherzugriffssteuerung (10, 20) nach einem der Ansprüche 1 bis 8 für das Übertragen von Daten an mehrere Empfänger, bei der die Mittel zum Speichern (38) für jeden Empfänger einen Arbeitszeiger zum Lesen (PT1, PT2) umfassen, der sich von dem ersten Zeiger zum Lesen (PL1, PL2) unterscheidet, wobei die Steuerung Mittel (30) zum Aktualisieren des Arbeitszeigers zum Lesen (PT1, PT2) jedes Empfängers (14₁, 14₂) umfasst, und wobei sie Mittel zum Blockieren eines Arbeitszeigers zum Lesen umfasst, wenn dieser auf außerhalb eines Speicherplatzes zeigt, der für das Lesen reserviert ist, definiert von dem ersten Zeiger zum Lesen (PL1, PL2) bis zur der Adresse, die dem Zeiger zum Schreiben (PE) vorausgeht.

10. Direkt-Speicherzugriffssteuerung nach einem der Ansprüche 1 bis 8 für das Übertragen von Daten an mehrere Empfänger, bei der die Mittel zum Speichern (38) für jeden Empfänger einen ersten Zeiger zum Lesen (PL1, PL2) umfassen, der mit einem Arbeitszeiger zum Lesen verbunden ist, und wobei sie Mittel zum Blockieren jedes Arbeitszeigers zum Lesen umfassen, wenn dieser auf außerhalb eines Speicherplatzes zeigt, der für das Lesen reserviert ist, definiert von dem ersten Zeiger zum Lesen (PL1, PL2), der mit dem betrachteten Arbeitszeiger zum Lesen verbunden ist, bis zur der Adresse, die dem Zeiger zum Schreiben (PE) vorausgeht.

11. Direkt-Speicherzugriffssteuerung nach einem der Ansprüche 1 bis 10 für das Übertragen von Daten von mehreren Quellen, bei der die Mittel zum Speichern für jede Quelle einen Arbeitszeiger zum Schreiben umfassen, der sich von dem zweiten Zeiger zum Schreiben unterscheidet, und Mittel zum Blockieren eines Arbeitszeigers zum Schreiben umfassen, wenn dieser auf außerhalb eines freien Speicherplatzes für das Schreiben zeigt, definiert von dem zweiten Zeiger zum Schreiben (PE) bis zu der Adresse, die dem ersten Zeiger zum Lesen (PL) vorausgeht.

12. Direkt-Speicherzugriffssteuerung nach einem der Ansprüche 1 bis 10 für das Übertragen von Daten von mehreren Quellen, bei der die Mittel zum Speichern (38) für jede Quelle einen zweiten Zeiger zum Schreiben umfassen, der mit einem Arbeitszeiger zum Schreiben in Verbindung steht, und Mittel zum Blockieren jedes Arbeitszeigers zum Schreiben umfassen, wenn dieser auf außerhalb eines freien Speicherplatzes zum Schreiben zeigt, definiert von dem zweiten Zeiger zum Schreiben, der mit dem betrachteten Arbeitszeiger zum Schreiben in Verbindung steht, bis zu der Adresse, die dem ersten Zeiger zum Lesen (PL) vorausgeht.

13. Direkt-Speicherzugriffssteuerung nach einem der Ansprüche 1 bis 8, bei der die Speichermittel einerseits einen Arbeitszeiger zum Schreiben, der sich von dem zweiten Zeiger zum Schreiben unterscheidet, und andererseits einen Arbeitszeiger zum Lesen, der sich von dem ersten Zeiger zum Lesen unterscheidet, umfassen.

14. Direkt-Speicherzugriffssteuerung nach einem der Ansprüche 1 bis 13, bei der die vorbestimmte Aktualisierungslogik das Verschieben des Arbeitszeigers (PT) nach vorn und nach hinten in dem Ringpufferspeicher (16) umfasst.

15. Datenübertragungsverfahren von mindestens einer Quelle (12) von Daten an mindestens einen Empfänger (14) dieser Daten über eine Direkt-Speicherzugriffssteuerung (10, 20) nach einem der Ansprüche 1 bis 14, umfassend, dass alle von der Quelle (12) empfangenen Daten von der Steuerung (10, 20) an einen Ringpufferspeicher (16) gesendet (106) werden und alle Daten, die an den Empfänger (14) übertragen werden sollen, in dem Ringpufferspeicher (16) von der Steuerung (10, 20) gelesen (118) werden, Schritte (110, 122) zum Blockieren der Lesevorgänge der Steuerung in dem Ringpufferspeicher und zum Blockieren der Schreibvorgänge der Steuerung in dem Ringpufferspeicher in Abhängigkeit von den jeweiligen Positionen der elementaren Speicherstellen, die durch die Zeiger zum Lesen und Schreiben angegeben werden, **dadurch gekennzeichnet, dass** es überdies die folgenden Schritte umfasst:
- Verschieben des Arbeitszeigers (PT) nach vorn oder nach hinten in dem Ringpufferspeicher (16),
- Blockieren des Arbeitszeigers zum Lesen oder Schreiben, wenn der Arbeitszeiger (PT) zum Lesen auf außerhalb eines Speicherplatzes zeigt, der für das Lesen reserviert ist, definiert von dem Zeiger zum Lesen (PL) bis zu der Adresse, die dem Zeiger zum Schreiben (PE) vorausgeht, oder beziehungsweise, wenn der Arbeitszeiger (PT) zum Schreiben auf außerhalb eines freien Speicherplatzes zum Schreiben zeigt, definiert von dem Zeiger zum Schreiben (PE) bis zu der Adresse, die dem Zeiger zum Lesen (PL) vorausgeht.

16. Computerprogramm, das von einem Kommunikationsnetz heruntergeladen werden kann und/oder auf einem computerlesbaren Träger gespeichert ist und/oder von einer Direkt-Speicherzugriffssteuerung (10, 20) ausgeführt werden kann, **dadurch gekennzeichnet, dass** es Programmcode-Befehle für das Ausführen von Schritten eines Verfahrens zur Datenübertragung nach Anspruch 15 umfasst, wenn dieses Programm von einer Direkt-Speicherzugriffssteuerung ausgeführt wird.

## Claims

1. A direct memory access controller (10, 20) for transferring data from at least one data source (12) to at least one destination (14) for this data, via a circular buffer memory (16), the access controller comprising:
- a module (24) for managing writing designed to write data received from said at least one source (12) in the circular buffer memory (16),
- means (38) for storing a first read pointer (PL) and a second write pointer (PE), said read pointer and write pointer, respectively, indicating an elementary location in the circular buffer memory where data can be read or written, respectively,
- a module (30) for managing reading designed to read data stored in the circular buffer memory (16) and transfer it to said at least one destination (14),
- means (24, 30, 40) for blocking reading and writing, respectively, in the circular buffer memory (16) based on the elementary locations indicated by said read and write pointers,
- means (38) for storing a read or write work pointer (PT) different from the first and second pointers (PL; PE), and
- means (24, 30, 40) for updating the work pointer (PT), after each read or write carried out by this work pointer (PT), according to a predetermined update logic,
**characterized in that** the predetermined update logic comprises forward and backward movements of the work pointer (PT) inside the circular buffer memory (16), and **in that** the controller includes means for blocking the read or write work pointer (PT) if the read work pointer points outside a memory space reserved for reading defined from the read pointer (PL) to the address preceding the write pointer (PE) or, respectively, if the write work pointer (PT) points outside the free memory space for writing defined from the write pointer (PE) to the address preceding the read pointer (PL).

2. A direct memory access controller (10, 20) according to claim 1, wherein the means for updating the work pointer comprises means (24, 30) for executing an update firmware (40).

3. A direct memory access controller (10, 20) according to claim 1 or 2, wherein the predetermined update logic comprises at least one address jump in the circular buffer memory.

4. A direct memory access controller (10, 20) according to any one of claims 1 to 3, wherein the means for blocking reading (30, 40) are designed to block any data read in the circular buffer memory (16) when an update to the read pointer (PL) causes the address to which it points to reach or exceed the address to which the write pointer (PE) points, and the means for blocking writing (24, 40) are designed to block any data write in the circular buffer memory (16) when an update to the write pointer (PE) causes the address to which it points to reach or exceed the address to which the read pointer (PL) points.

5. A direct memory access controller (10, 20) according to any one of claims 1 to 4, wherein the read pointer (PL) is a read pointer that releases memory space to write data and wherein the work pointer (PT) is a read pointer that preserves read data.

6. A direct memory access controller (10, 20) according to claims 2 and 5, wherein the firmware (40) is designed to update only the first read pointer (PL) and the read work pointer (PT), the write pointer (PE) being automatically updated by incrementation, without an address jump, at each operation to write data to the circular buffer memory (16).

7. A direct memory access controller (10, 20) according to any one of claims 1 to 4, wherein the second write pointer (PE) is a write pointer that reserves memory space for reading data and wherein the work pointer (PT) is a write pointer.

8. A direct memory access controller (10, 20) according to claims 2 and 7, wherein the firmware (40) is designed to update only the second write pointer (PE) and the write work pointer (PT), the read pointer (PL) being automatically updated by incrementation, without an address jump, at each operation to read data in the circular buffer memory (16).

9. A direct memory access controller (10, 20) according to any one of claims 1 to 8, for transferring data to multiple destinations, wherein for each destination, the storage means (38) comprises a read work pointer (PT1, PT2), which is different from the first read pointer (PL1, PL2), the controller comprising means (30) for updating the read work pointer (PT1, PT2) of each destination (14₁, 14₂), and comprising means for blocking a read work pointer if it points outside of a memory space reserved for reading defined from the first read pointer (PL1, PL2) to the address preceding the write pointer (PE).

10. A direct memory access controller according to any one of claims 1 to 8, for transferring data to multiple destinations, wherein for each destination, the storage means (38) comprises a first read pointer (PL1, PL2) associated to a read work pointer, the access controller further comprising means for blocking each read work pointer if it points outside of a memory space reserved for reading defined from the first read pointer (PL1, PL2), associated to the considered read work pointer, to the address preceding the write pointer (PE).

11. A direct memory access controller according to any one of claims 1 to 10, for transferring data from multiple sources, wherein, for each source, the storage means comprises a write work pointer, which is different from the second write pointer, the access controller comprising means for blocking a write work pointer if it points outside of the free memory space for writing defined from the second write pointer (PE) to the address preceding the first read pointer (PL).

12. A direct memory access controller according to any one of claims 1 to 10, for transferring data from multiple sources, wherein, for each source, the storage means (38) comprises a second write pointer, associated to a write work pointer, the access controller comprising means for blocking each write work pointer if it points outside of the free memory space for writing defined from the second write pointer associated to the considered write work pointer, to the address preceding the first read pointer (PL).

13. A direct memory access controller according to any one of claims 1 to 8, wherein the storage means comprises a write work pointer, which is different from the second write pointer, and a read work pointer, which is different from the first read pointer.

14. A direct memory access controller according to any one of claims 1 to 13, wherein the predetermined update logic comprises forward and backward movements of the work pointer (PT) in the circular buffer memory (16).

15. A method for transferring data from at least one data source (12) to at least one destination (14) for this data by a direct memory access controller (10, 20) according to any one of claims 1 to 14, comprising, each data received from the source (12) being sent (106) by the controller (10, 20) to a circular buffer memory (16) and each data to be transmitted to the destination (14) being read (118) in the circular buffer memory (16) by the controller (10, 20), steps (110, 122) for blocking reading by the controller in the circular buffer memory and for blocking writing by the controller in the circular buffer memory based on relative elementary locations indicated by the read and write pointers, **characterized in that** it further comprises the following steps:
- movements of the work pointer (PT) forward and backward in the circular buffer memory (16),
- blocking of the read or write work pointer if the read work pointer (PT) points outside of the memory space reserved for reading and defined from the read pointer (PL) to the address preceding the write pointer (PE), or respectively, if the write work pointer (PT) points outside of the free memory space for writing defined from the write pointer (PE) to the address preceding the read pointer (PL).

16. A computer program that can be downloaded from a communication network and/or saved on a computer-readable medium and/or executed by a direct memory access controller (10, 20), **characterized in that** is comprises program code for executing the steps of a method for transferring data according to claim 15, when said program is executed by a direct memory access controller.
